# EUROPEAN PATENT APPLICATION

(11) **EP 2 809 109 A1**
(43) Date of publication of application: **03.12.2014**
(21) Application number: 12866651.8
(22) Date of filing: 25.01.2012
(51) Int. Cl.: H04W 52/02, H04W 36/08

(54) **WIRELESS COMMUNICATION SYSTEM, RADIO BASE STATION, RADIO TERMINAL, AND WIRELESS COMMUNICATION METHOD**

(71) Applicant: Fujitsu Limited, Kawasaki-shi, Kanagawa 211-8588 (JP)
(72) Inventor: TOYODA, Minoru, Kawasaki-shi Kanagawa 211-8588 (JP); YASUOKA, Hirotomo, Kawasaki-shi Kanagawa 211-8588 (JP); CHIBA, Katsuhiko, Kawasaki-shi Kanagawa 211-8588 (JP)
(74) Representative: Hoffmann Eitle
(86) International application number: PCT/JP2012/000478
(87) International publication number: WO 2013/111191

(57) **Abstract**

A radio communication system including: when operation of a radio terminal pauses, a radio base station to which the radio terminal is coupled before the operation starts to pause retains connection information for coupling the radio base station to the radio terminal, and when the radio terminal performs returning under the control of a different radio base station, the different radio base station obtains the connection information that is retained by the radio base station to which the radio terminal is coupled before the operation pauses and uses the connection information in setting up a connection of the radio base station to the radio terminal.

## Description

### FIELD

The present invention relates to a radio communication system, a radio base station, a radio terminal, and a radio communication method.

### BACKGROUND

In recent years, in radio communication systems such as a mobile phone system, discussions on next generation radio communication technologies have been performed to further enhance high speed and high capacity radio communication. For example, in the 3rd Generation Partnership Project (3GPP) that is a standard organization, a communication standard called Long-Term Evolution (LTE) or a communication standard called LTE-Advanced (LTE-A) that is based on an LTE radio communication technology has been proposed.

On the other hand, like a personal computer or the like that is connected at all times to the Internet over a cable communication network, a so-called smart phone that is high-performance radio terminal and that has come into wide use is in a state of being connected at all times to the Internet over a radio communication network. Because of this, it is strongly recommended that an amount of power consumption be suppressed that results from an increase in power consumption per unit hour due to the high performance and additionally from an increase in power consumption time due to the state of being connected at all times. Also in the LTE described above and the like, Fast Dormancy (a high speed pause function) is standardized for the purpose of suppressing the amount of power consumption in the radio terminal such as the smart phone.

If data communication between the radio terminal and a radio communication network is broken, the Fast Dormancy function enables the radio terminal to notify a radio base station of connection termination and then promptly proceed to a pause state. With the Fast Dormancy function, the radio terminal such as the smart phone can properly release the state of being connected at all times and can proceed to the pause state where an amount of power consumption is small. Because of this, with the Fast Dormancy function, the amount of power consumption of the radio terminal is possible to suppress.

The radio terminal that with the Fast Dormancy function, is placed in the pause state performs returning from the pause state when a communication request takes place. The communication request takes place if the data communication is resumed by a user operating an application on the radio terminal, if an incoming call arrives at the radio terminal, and so on. At this time, a predetermined procedure for communication resumption is performed between the radio terminal and the radio base station side.

In such a procedure for the communication resumption, various setups in the radio terminal, various setups in the radio base station, various setups in a network side high-level station, and the like are performed. These various setups are desired for the radio terminal to perform communication and those include setting up parameters for the communication in each apparatus, ensuring a communication resource between each apparatus, and the like. When the radio terminal proceeds to the pause state, because the connection of the radio base station to the radio terminal is temporarily broken at the communication network side, these various setups are temporarily released. Because of this, when the radio terminal resumes the communication, these procedures are desired.

In the procedures for the radio terminal resuming the communication, exchange of many control signals (also referred to as signaling or messages) is performed between the radio terminal and the radio communication network. Because of this, when proceeding to the resumption of the communication by the radio terminal from the pause state is repeated based on the Fast Dormancy function, an amount of control signals becomes enormous and there occurs a problem that a network resource becomes in short supply.

In the related art, it is known that part of a predetermined procedure that is involved when the radio terminal resumes the communication is omitted by the radio base station and the like maintaining various setups without releasing such various setups even while the radio terminal is in the pause.

Japanese Laid-open Patent Publication No. 2005-33481, and Japanese Laid-open Patent Publication No. 2007-312393 disclose examples of the related art.

Also, non-patent literature 3GPP TSG-RAN R2-074848(2007-11), 3GPP TS36.300 V9.9.0(2011-12), 3GPP TS36.331 V9.8.0(2011-09), 3GPP TS36.413 V9.7.0(2011-06), 3GPP TS36.423 V9.6.0(2011-03), and 3GPP TS24.301 V9.8.0(2011-09) disclose examples of the related art.

### SUMMARY

### [TECHNICAL PROBLEM]

However, in the related art described above, part of the procedure that is involved when the radio terminal resumes communication is not typically omitted. Specifically, if the radio base station that is available when the radio terminal proceeds to the pause state and the radio base station that is available when the radio terminal resumes the communication are the same (if the radio terminal does not move while in the pause), part of the procedure that is involved when resuming the communication can be omitted in the related art. The various setups that are maintained in the radio base station while the radio terminal is in the pause can continue to be used when the radio terminal resumes the communication.

On the other hand, if the radio base station that is available when the radio terminal proceeds to the pause state and the radio base station that is available when the radio terminal resumes the communication are different from each other (if the radio terminal moves while in the pause), part of the procedure that is involved when resuming the communication is also not omitted in the related art. Therefore, in the related art, if the radio base station to which the radio terminal is connected before the pause is different from the radio base station to which the radio terminal is connected after the pause, there remains a problem in that the control signal is not suppressed when the radio terminal resumes the communication.

In view of the situations described above, an object of the disclosed technology is to provide a radio communication system, a radio base station, radio terminal, and a radio communication method, which are capable of reducing a control signal when the radio terminal resumes communication even though the radio base station to which the radio terminal is connected before a pause is different from the radio base station to which the radio terminal is connected after the pause.

### [SOLUTION TO PROBLEM]

In order to solve the problems described above and accomplish the object, in a radio communication system that is disclosed in the present specification, when operation of a radio terminal pauses, a radio base station to which the radio terminal is coupled before the operation starts to pause retains connection information for coupling the radio base station to the radio terminal, and when the radio terminal performs returning under the control of a different radio base station, the different radio base station obtains the connection information that is retained by the radio base station to which the radio terminal is coupled before the operation pauses and uses the connection information in setting up a connection of the radio base station to the radio terminal.

### [ADVANTAGEOUS EFFECTS OF INVENTION]

According to one embodiment of a radio communication system, in a radio base station, radio terminal, and a radio communication method that are disclosed in the present specification, even though the radio base station to which the radio terminal is connected before a pause and the radio base station to which the radio terminal is connected after the pause are different from each other, an effect is accomplished that can reduce a control signal when the radio terminal resumes communication.

### BRIEF DESCRIPTION OF DRAWINGS

FIG. 1 illustrates one example of a network configuration of a radio communication system according to the present embodiment.
FIG. 2 illustrates a sequence of operations in a case where radio terminal moves while in a pause in a radio communication system in the related art.
FIG. 3 illustrates a sequence of operations in a case where the radio terminal does not move while in the pause in the radio communication system in the related art.
FIG. 4 illustrates one example of a sequence of operations in call release processing in a radio communication system according to the present embodiment.
FIG. 5 illustrates one example of a sequence of operations for call setup processing in a case where the radio terminal moves while in the pause in the radio communication system according to the present embodiment.
FIG. 6 illustrates one example of a sequence of operations of the call setup processing that is performed if the radio terminal does not move while in the pause in the radio communication system according to the present embodiment.
FIG. 7 illustrates one example of a functional configuration of the radio terminal in the communication system according to the present embodiment.
FIG. 8 illustrates one example of a hardware configuration of the radio terminal in the communication system according to the present embodiment.
FIG. 9 illustrates one example of a functional configuration of a radio base station in the communication system according to the present embodiment.
FIG. 10 illustrates one example of a hardware configuration of the radio base station in the communication system according to the present embodiment.
FIG. 11 illustrates one example of a functional configuration of a mobile management entity in the communication system according to the present embodiment.
FIG. 12 illustrates one example of a hardware configuration of the mobile management entity in the communication system according to the present embodiment.
FIG. 13 illustrates one example of a functional configuration of a serving-gateway in the communication system according to the present embodiment.
FIG. 14 illustrates one example of a hardware configuration of the serving-gateway in the communication system according to the present embodiment.
FIGs. 15A and 15B illustrate one example of a control message in the communication system according to the present embodiment.
FIG. 16 illustrates one example of a storage unit that is included in the radio terminal in the communication system according to the present embodiment.
FIG. 17 illustrates one example of the storage unit that is included in the radio base station in the communication system according to the present embodiment.

### DESCRIPTION OF EMBODIMENTS

A radio communication system, a radio base station, radio terminal, and a radio communication method according to embodiments, which are disclosed, are described below referring to the drawings. Moreover, for convenience, descriptions are provided according to individual embodiments, but it goes without saying that combinations of the embodiments can bring out combination effects and an increase in usefulness.

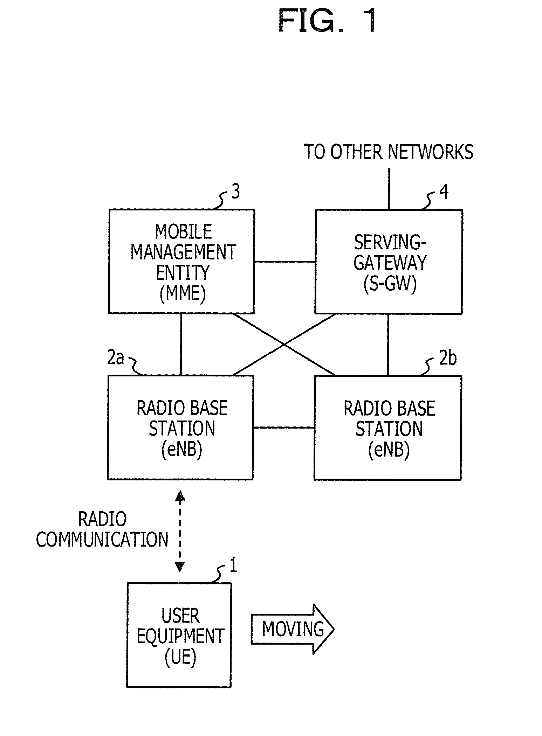

FIG. 1 illustrates a network configuration of the radio communication system according to the present embodiment. The present embodiment is an embodiment associated with the radio communication system based on LTE. Because of this, some terms and concepts that are specific to LTE are used. However, it is noted that the present embodiment is only one example, and is applicable also to a radio communication system that is based on communication standards other than LTE.

An LTE network illustrated in FIG. 1 includes radio terminal (UE: user equipment) 1, radio base stations (eNB: evolved Node B) 2a and 2b, mobile management entity (MME) 3, a serving-gateway (S-GW) 4, and the like. The radio terminal 1 performs radio communication with the radio base station 2a, but when moving to under the control of the radio base station 2a, performs radio communication with the radio base station 2b when under the control of the radio base station 2b. The serving-gateway 4 is one type of gateway that performs transmission of user data. The radio terminal 1 performs data communication with other networks, such as the Internet, through the radio base station 2a or 2b and the serving-gateway 4 in this order. The mobile management entity 3 is an apparatus that has a function of setting up mobile management or authentication, and a transmission path for user data between the radio base station 2a or 2b and the serving-gateway 4. In subsequent descriptions, the multiple radio base stations 2a and 2b are collectively expressed as a radio base station 2.

Moreover, the LTE network is referred to as an Evolved Packet System (EPS). EPS includes the Evolved Universal Terrestrial Radio Network (eUTRAN) that is a radio Access Network and the Evolved Packet Core (EPC) that is a Core Network. The Core Network is referred to as the System Architecture Evolution (SAE).

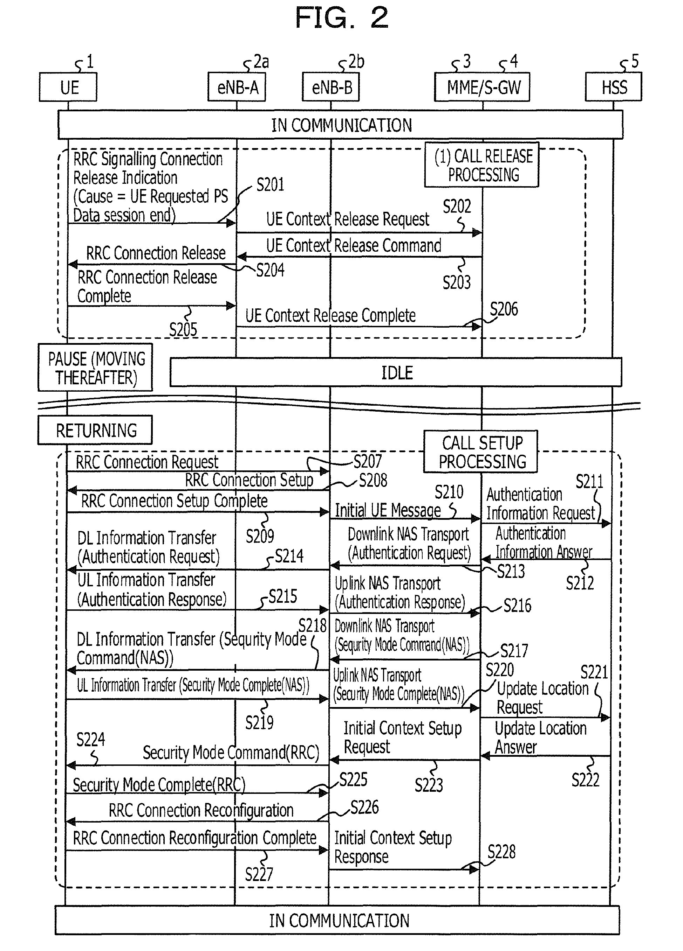

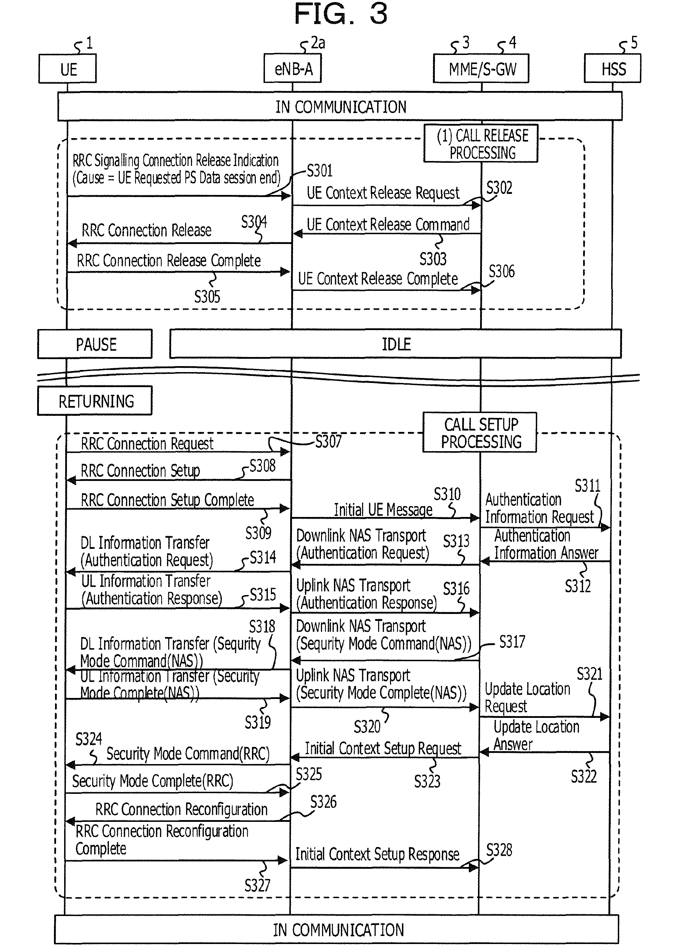

At this point, first, in preparation for a detailed description of the present embodiment, general Fast Dormancy processing in the related art is described referring to FIGs. 2 and 3. In the general Fast Dormancy processing in the related art, it is assumed that a home subscriber server (HSS) 5 is present in addition to the apparatuses in FIG. 1 illustrating the network configuration of the radio communication system according to the present embodiment. The home subscriber server 5 is an apparatus that has a function of handling service control or subscriber data.

FIG. 2 illustrates one example of a sequence of operations in the general Fast Dormancy processing. The example in FIG. 2 corresponds to a case where the radio base stations 2 to which the radio terminal 1 is connected before and after a pause are different. One radio base station to which the radio terminal 1 is connected before the pause is set to be the radio base station 2a (expressed as eNB-A in the drawings), and a different radio base station to which the radio terminal 1 is connected after the pause is set to be the radio base station 2b (expressed as eNB-B in the drawings). In FIG. 2, a portion indicated with (1) is equivalent to a processing procedure (referred to as a call release processing) that is involved when the radio terminal 1 proceeds to the pause state. Furthermore, a portion indicated with (2) is equivalent to a processing procedure (referred to as call setup processing) that is involved in when the radio terminal 1 performs returning from a pause state and resumes communication.

First, the call release processing is described.

If data transmission and reception between the radio terminal 1 and the radio base station 2a that is the radio base station 2 in communication is broken (or if a predetermined time elapses after the transmission and reception is broken), the radio terminal 1 determines proceeding to the pause state. At this point, the pause state may be a state in which power consumption of the radio terminal 1 is relatively small. Generally, in a state where the radio terminal 1 intermittently transmits and receives control information, the power consumption is relatively small because power supply for functions that are not used is stopped during a period of time in which the control information is not transmitted and received. Specifically, in addition to an idle mode that is a waiting state, the pause state includes a paging channel mode (PCH mode), a forward access channel mode (FACH mode), and the like.

When determining the proceeding to the pause state, the radio terminal 1 transmits an RRC Signaling Connection Release Indication that is a message for requesting release of a resource for a radio resource control (RRC) connection to the radio base station 2a that is the radio base station 2 in connection (S201). At this point, the RRC connection is a radio connection between the radio terminal 1 and the radio base station 2. Furthermore, because an interface between the radio terminal 1 and the radio base station 2 is called an LTE-Uu interface, the RRC connection resource is hereinafter referred to as a Uu resource.

A Cause region in which to store a cause for releasing the Uu resource is prepared in the RRC Signaling Connection Release Indication. If the proceeding to the pause state takes place, the radio terminal 1 stores the UE Requested PS Data session end in the Cause region of the RRC Signaling Connection Release Indication.

When receiving the RRC Signaling Connection Release Indication, the radio base station 2a checks content in the Cause region of the RRC Signaling Connection Release Indication. If the content in the Cause region is the UE Requested PS Data session end, the radio base station 2a recognizes that the radio terminal 1 proceeds to the pause state. Then, the radio base station 2a transmits to the mobile management entity 3 a UE Context Release Request that is a message that requests that UE context be released (deleted) (S202). At this point, the UE context is information that is retained in the radio base station 2a and that includes various parameters relating to a communication setup situation of the radio terminal 1. Furthermore, the release of the UE context means that a connection for the radio terminal 1 between the radio base station 2a, and the mobile management entity 3 that is a high-level station and the serving-gatewayserving-gateway 4 is broken. That is, with the release of the UE context, network resources are released between the radio base station 2a and the mobile management entity 3 and between the radio base station 2a and the serving-gatewayserving-gateway 4, respectively. Generally, an interface between the radio base station 2 and the mobile management entity 3 is called an S1-mobile management entity 3 interface, and an interface between the radio base station 2 and the serving-gatewayserving-gateway 4 is called a S1-U interface. The two interfaces are collectively called an S1 interface. The network resource between the radio base station 2 and the serving-gatewayserving-gateway 4 is called an S1 resource below.

The Cause region in which the cause for releasing the UE context is stored is prepared in the UE Context Release Request. The radio base station 2a sets the UE Requested PS Data session end to be in the Cause region of the UE Context Release Request, in accordance with the received RRC Signaling Connection Release Indication.

When receiving the UE Context Release Request, the mobile management entity 3 determines whether or not the UE context is released, based on the content in the Cause region and the like. Then, if the UE context is released, the mobile management entity 3 performs transmission (not illustrated) of a Release Access Bearer Request to the serving-gatewayserving-gateway 4 and reception of a Release Access Bearer Response from the serving-gatewayserving-gateway 4. Accordingly, an S1-U resource is first released. Then, the mobile management entity 3 transmits to the radio base station 2a a UE Context Release Command that is a message for instructing the release of the UE context (S203).

When receiving the UE Context Release Command, the radio base station 2a transmits to the radio terminal 1 an RRC Connection Release that is a message for releasing the RRC connection resource (the Uu resource) (S204). When receiving the RRC Connection Release, the radio terminal 1 replies to the radio base station 2a with an RRC Connection Release Complete that is a message that notifies the release of the RRC connection resource (S205). Thereafter, the radio terminal 1 releases the RRC connection resource (the Uu resource) at the radio terminal 1 side and proceeds to the pause state.

When receiving the RRC Connection Release Complete, the radio base station 2a releases the UE context and performs the release of the RRC connection resource (the Uu resource) at the radio base station 2a side. Then, the radio base station 2a transmits to the mobile management entity 3 a UE Context Release Complete that is a message that notifies that the release of the UE context is completed (S206). Last, both the radio base station 2a and the mobile management entity 3 perform the release of an S1-mobile management entity 3 resource. Accordingly, the release of the S1 resource is completed, and the network side proceeds to the idle state. Accordingly, the call release processing is completed.

Subsequently, the call setup processing is described referring to FIG. 2. Moreover, as described above, in FIG. 2, while in the pause, the radio terminal 1 falls under the control of the radio base station 2a to under the control of the radio base station 2b.

When determining returning to a radio communication network according to a communication request from an application or the like, the radio terminal 1 transmits to the radio base station 2b an RRC Connection Request that is a message that requests a setup of the RRC connection (S207). The Cause region in which a cause for setting up the RRC connection is stored is prepared in the RRC Connection Request. The radio terminal 1 selects a value that is assigned to the Cause region according to the received communication request. For example, if the communication request is based on the data transmission with the radio terminal 1 as a starting point, mobile originating Data (mo-Data) is stored in the Cause region. As other values of the Cause that are adopted, there are prepared emergency, highPriorityAccess, mobile terminating Access (mt-Access), mobile originating signaling (mo-signaling), and the like.

When receiving the RRC Connection Request, the radio base station 2b determines whether or not the RRC connection is set up, based on such a Cause value and the like. Then, if the RRC connection is set up, the radio base station 2b ensures the Uu resource that is the RRC connection resource and performs the setup of the RRC connection. Then, when RRC connection setup processing is successful, the radio base station 2b replies to the radio terminal 1 with an RRC Connection Setup that is a message for setting up the RRC connection (S208). When receiving the RRC Connection Setup, the radio terminal 1 performs the setup relating to the RRC connection according to setup parameters that are set in the RRC Connection Setup. Accordingly, the radio terminal 1 is in a state of being connected to the RRC connection. Then, the radio terminal 1 replies to the radio base station 2b with an RRC Connection Setup Complete that is a message for notifying that the setup of the RRC connection is successful and completed (S209). At this time, the radio terminal 1 transmits an Attach Request that is a None Access Stratum (NAS) message for requesting the mobile management entity 3 for the radio terminal 1 belonging to the radio communication network, with the NAS message being stored in a predetermined region of the RRC Connection Setup Complete.

According to the reception of the RRC Connection Setup Complete, the radio base station 2b transmits an Initial UE Message to the mobile management entity 3 (S210). At this time, the radio base station 2b transmits the Attach Request that is stored in the received RRC Connection Setup Complete, with the Attach Request being stored in the Initial UE Message. According to the reception of the Attach Request stored in the Initial UE Message, the mobile management entity 3 transmits to the home subscriber server 5 an Authentication Information Request that is a message that requests authentication information (S211). The home subscriber server 5 replies to the mobile management entity 3 with an Authentication Information Answer that is a message including the authentication information, according to the received Authentication Information Request (S212).

According to the reception of the Authentication Information Answer, the mobile management entity 3 transmits to the radio base station 2b an Authentication Request that is a NAS message that makes a request to the radio terminal 1 for authentication, with the Authentication Request being stored in a Downlink NAS Transport that is a message for transmitting the NAS message to the radio base station 2 (S213). According to the reception of the Authentication Request stored in the Downlink NAS Transport, the radio base station 2b transmits to the radio terminal 1 the received Authentication Request, with the received authentication request being stored in a DL Information Transfer that is a message for transmitting the NAS message to the radio terminal 1 (S214). According to the reception of the Authentication Request stored in the Downlink Information Transfer, the radio terminal 1 transmits to the radio base station 2b an Authentication Response that is a NAS message that includes the requested authentication information, with the Authentication Response being stored in a UL Information Transfer that is a message for transmitting to the radio base station 2 the NAS message destined to the mobile management entity 3 (S215).

According to the reception of the Authentication Response stored in the UL Information Transfer, the radio base station 2b transmits the received Authentication Response to the mobile management entity 3, with the received authentication being stored in an Uplink NAS Transport that is a message for transmitting the NAS message to the mobile management entity 3 (S216). The mobile management entity 3 receives the Authentication Response stored in the Uplink NAS Transport. The mobile management entity 3 performs authentication processing of the radio terminal 1 by checking whether the authentication information included in the Authentication Response is requested.

Thereafter, the mobile management entity 3 transmits to the radio base station 2b a Security Mode Command (expressed as a "Security Mode Command (NAS)" in the drawings) that is a NAS message that activates a security mode relating to the NAS, with the Security Mode Command being stored in the Downlink NAS Transport (S217). At this point, the security mode relating to the NAS refers to various setups relating to security of the NAS and includes, for example, an encryption scheme and the like for ensuring the security of the NAS message. According to the reception of the Security Mode Command stored in the Downlink NAS Transport, the radio base station 2b transmits to the radio terminal 1 the received Security Mode Command, with the received Security Mode Command being stored in the DL Information Transfer (S218). According to the reception of the Security Mode Command stored in the Downlink NAS Transport, the radio terminal 1 performs a setup of the security mode relating to the NAS. Then, the radio terminal 1 transmits to the radio base station 2b a Security Command Complete (expressed as a "Security Mode Complete (NAS)" in the drawings) that is the NAS message that notifies that the reception of the security mode relating to the NAS is completed, with the Security Command Complete being stored in the UL Information Transfer (S219).

According to the reception of the Security Command Complete stored in the UL Information Transfer, the radio base station 2b transmits the received Security Mode Complete to the mobile management entity 3, with the received Security Mode Complete being stored in the Uplink NAS Transport (S220). The mobile management entity 3 receives the Security Mode Complete stored in the Uplink NAS Transport. Accordingly, the setup of the NAS-related security mode in the radio terminal 1 is completed.

Next, the mobile management entity 3 transmits to the home subscriber server 5 an Update Location Request that is a message that requests update of positional information on the radio terminal 1 (S221). According to the received Update Location Request, the home subscriber server 5 performs the update of the positional information on the radio terminal 1. Then, the home subscriber server 5 replies to the mobile management entity 3 with an Update Location Answer that is a message that notifies that the update of the positional information on the radio terminal 1 is completed (S222).

Next, the mobile management entity 3 transmits to the radio base station 2b an Initial Context Setup Request that is a message that requests an initial setup of the UE context (that is, the S1 resource) (S223). At this time, the mobile management entity 3 stores in the Initial Context Setup Request an Attach Accept that is a NAS message that indicates that the placing of radio terminal 1 on the network is accepted. According to the reception of the Attach Accept stored in the Initial Context Setup Request, the radio base station 2b transmits to the radio terminal 1 the Security Mode Command (expressed as a "Security Mode Command (RRC)" in the drawings) that is a message for activating the security mode relating to the RRC (S224). At this point, the security mode relating to the RRC refers to various setups relating to the security of the RRC and includes, for example, information and the like for encrypting an RRC control message or user data. According to the reception of the Security Mode Command, the radio terminal 1 performs the setup of the security mode relating to the RRC. Then, the radio terminal 1 transmits to the radio base station 2b the Security Command Complete (expressed as the "Security Mode Complete (RRC)" in the drawings) that is a message that notifies that the setup of the security mode relating to the RRC is completed (S225).

Next, the radio base station 2b transmits to the radio terminal 1 an RRC Connection Reconfiguration that is a message that requests a re-setup of the RRC connection (S226). At this time, the radio base station 2b stores the earlier-received Attach Accept in the RRC Connection Reconfiguration. When receiving the Attach Accept stored in the RRC Connection Reconfiguration, the radio terminal 1 performs the re-setup of the RRC connection, based on setup information stored in the Attach Accept. Then, the radio terminal 1 transmits to the radio base station 2b an Attach Complete that is a message that indicates that the placing of radio terminal 1 on the radio communication network is completed, with the Attach Complete being stored in an RRC Connection Reconfiguration Complete that is a message that indicates that the re-setup of the RRC connection is completed (S227).

According to the reception of the RRC Connection Reconfiguration Complete, the radio base station 2b performs the setup (generation) of the UE context. Then, the radio base station 2b transmits to the mobile management entity 3 an Initial Context Setup Response that is a message that notifies that the setup of the UE context is completed (S228). At this time, the radio base station 2b stores in the Initial Context Setup Response the Attach Complete stored in the received RRC Connection Reconfiguration Complete.

The mobile management entity 3 receives the Attach Complete stored in the Initial Context Setup Response. Accordingly, in both the radio base station 2b and the mobile management entity 3, a setup of the S1-mobile management entity 3 resource that is a communication resource between the radio base station 2b and the mobile management entity 3 is performed. Moreover, the mobile management entity 3 performs transmission (not illustrated) of a Modify Bearer Request to the serving-gatewayserving-gateway 4 and reception (not illustrated) of a Modify Bearer Response from the serving-gatewayserving-gateway 4. Accordingly, the S1-U resource that is the network resource between the radio base station 2b and the serving-gatewayserving-gateway 4 is set up. As described above, the setup of the S1 resource is completed, preparation for resumption of communication by the radio terminal 1 is finished, and the radio terminal and the radio communication network are in a state of being in communication.

FIG. 3 illustrates another example of a sequence of operations in the general Fast Dormancy processing. Whereas the example in FIG. 2 is a case where different radio base stations 2 make connections before and after the radio terminal 1 is in the pause (eNB-A and eNB-B), respectively, the example in FIG. 3 corresponds to a case where the same radio base station 2 makes a connection before and after the radio terminal 1 is in the pause (eNB-A). Because the other parties, the radio base stations 2, that perform communication at the time of the resumption of the communication by the radio terminal 1, are different in FIGs. 2 and 3, there is no difference in a flow of processing or in content of the message. Because of this, a description that is provided referring to FIG. 3 is omitted.

As illustrated in FIGs. 2 and 3, particularly at the time of the resumption of the communication by the radio terminal 1, many messages are exchanged. Therefore, when the proceeding to the resumption of the communication by the radio terminal 1 from the pause state is repeated based on a Fast Dormancy function, an amount of the messages becomes enormous and there occurs a problem that the network resource becomes in short supply. An object of the disclosed technology is to solve such a problem.

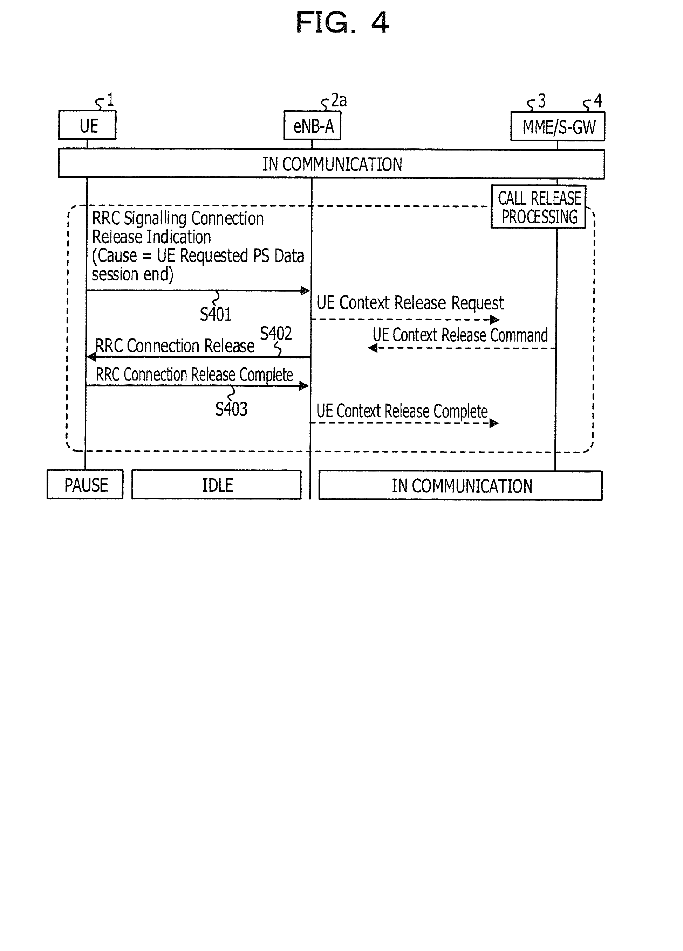

The sequence of operations in the radio communication system according to the present embodiment is described below referring to FIGs. 4 to 6.

FIG. 4 is a diagram illustrating one example of a sequence of operations in the call release processing (the processing at the time when the radio terminal 1 is in the pause) according to the present embodiment.

First, when determining the proceeding to the pause state from a state of being in communication, the radio terminal 1 transmits the RRC Signaling Connection Release Indication, in the Cause region of which the UE Requested PS Data session end is stored, to the radio base station 2a that is the radio base station 2 in connection, in the same manner as in the call release processing (FIG. 2 or 3) in a Fast Dormancy in the related art (S401). On the other hand, when receiving the RRC Signaling Connection Release Indication, in the Cause region of which the UE Requested PS Data session end is stored, the radio base station 2a recognizes that the radio terminal 1 proceeds to the pause state.

At this time, the radio base station 2a does not perform the release of the S1 resource that is the network resource between the radio base station 2 and the mobile management entity 3/the serving-gateway 4, which is different from the call release processing in the related art. Because of this, unlike in FIG. 2 or 3, the radio base station 2a does not transmit the UE Context Release Request to the mobile management entity 3. Accordingly, the mobile management entity 3 also does not transmit the UE Context Release Command to the radio base station 2a. Moreover, in FIGs. 4 and later, the message (the message that according to the present embodiment is omitted from the processing in the related art which is illustrated in FIG. 2 or 3) that is not transmitted according to the present embodiment is indicated with a dashed arrow.

When recognizing that the radio terminal 1 proceeds to the pause state, the radio base station 2a transmits the RRC Connection Release to the radio terminal 1 (S402). At this point, when receiving the RRC Connection Release, the radio terminal 1 separately stores the radio terminal side setup information that is information that is used in the radio terminal 1 when the radio terminal 1 performs the returning, which is different from the call release processing in the related art. This is done to put aside the information that is to be used when the radio terminal 1 performs the returning even after the RRC connection resource is released.

At this point, the radio terminal side setup information includes various pieces of setup information that are set to be in the radio terminal 1 in the related art by a procedure that is omitted according to the present embodiment. Moreover, specifically, the radio terminal side setup information includes pieces of information that are included in 3 messages, the Security Mode Command (NAS), the Security Mode Command (RRC) and the Attach Accept in FIG. 3. Because the radio terminal side setup information is information that is already retained by the radio terminal 1 before the radio terminal 1 is in the pause, but is released (erased) in the related art when the radio terminal 1 is in the pause, the radio terminal side setup information is re-set by a predetermined procedure that includes the reception of the 3 messages described above, when the radio terminal 1 performs the returning. According to the present embodiment, because the radio terminal 1 does not release the radio terminal side setup information when the radio terminal 1 is in the pause, the predetermined procedure is possible to omit when the radio terminal 1 performs the returning. The radio terminal side setup information is described below.

Referring back to FIG. 4, the radio terminal 1 separately stores a CellID that is an ID of a cell in which the radio terminal 1 is located. The CellID is obtained from the setup information relating to the RRC connection resource at the radio terminal 1 side. According to the present embodiment, as one example, the cell ID of the radio base station 2a is set to be "10". At this time, the radio terminal 1 stores "10" as a value of the CellID.

Then, the radio terminal 1 replies to the radio base station 2a with the RRC Connection Release Complete (S403). Thereafter, the radio terminal 1 releases the RRC connection resource (the Uu resource that is the network resource between the radio terminal 1 and the radio base station 2a) at the radio terminal 1 side and proceeds to the pause state. Even though the radio terminal 1 is in the pause state, with the processes described above, the radio terminal setup information that is to be used when the radio terminal 1 performs the returning continues to be retained within the radio terminal 1.

When receiving the RRC Connection Release Complete, the radio base station 2a performs the release of the RRC connection resource at the radio base station 2a side, which is the same as the call release processing in the related art. At this point, because the radio base station 2a does not perform the release of the S1 resource as described above, the radio base station 2a does not transmit the UE Context Release Complete to the mobile management entity 3, which is different from the call release processing in the related art. Furthermore, the radio base station 2a continues to retain S1 setup information that includes the UE context without releasing (erasing) the S1 setup information.

At this point, the S1 setup information includes information that is to be used in the radio base station 2 when the radio terminal 1 performs the returning, and includes various pieces of information that are obtained by the radio base station 2 in the related art using the procedure that is omitted according to the present embodiment. Moreover, specifically, the S1 setup information includes information corresponding to the UE context, that is, information that is included in the message in FIG. 3, which is the Initial Context Setup Request. Because the S1 setup information is information that is already retained by the radio base station 2 before the radio terminal 1 is in the pause, but is released (erased) in the related art when the radio terminal 1 is in the pause, the S1 setup information is re-set by a predetermined procedure that includes the reception of the Initial Context Setup Request, when the radio terminal 1 performs the returning. According to the present embodiment, because the radio base station 2 does not release these pieces of information when the radio terminal 1 is in the pause, part of the predetermined procedure is possible to omit when the radio terminal 1 performs the returning. The S1 setup information is described in detail below.

With the procedure described above, the call release processing is completed in a state (of being in communication) where the Uu resource is released (in the idle state) and the release of the S1 resource is not completed. Accordingly, even though the radio terminal 1 is in the pause, the S1 resource continues to be retained without being released.

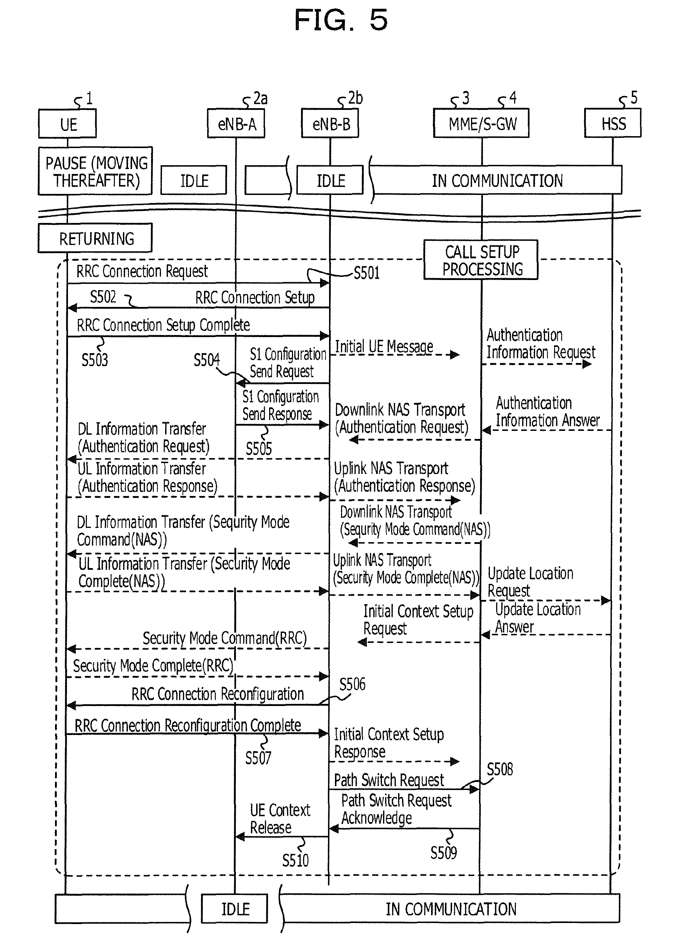

FIG. 5 is a diagram illustrating one example of a sequence of operations in the call setup processing (processing that is performed when the radio terminal 1 performs the returning after the pause) according to the present embodiment. The example in FIG. 5 corresponds to a case where different radio base stations 2 make connections before and after the radio terminal 1 is in the pause, respectively.

When determining the returning to the radio communication network by detecting the communication request or performing other functions, the radio terminal 1 transmits the RRC Connection Request to the radio base station 2b that is a new connection destination, which is the radio base station 2 (S501). At this point, as a value of the Cause in the RRC Connection Request, a value indicating "returning from the pause" that is not prepared in the call setup processing in the related art is stored. The value may be newly prepared, and one among spare values that are already prepared may be used. According to the present embodiment, as one example, a Spare 3 that is a spare value is set to be used as the value indicating "returning from the pause".

Furthermore, the CellID that is a new region is prepared in the RRC Connection Request, which is different from the call setup processing in the related art. The CellID that is stored by the radio terminal 1 before the pause, that is, an identifier of a cell to which the radio terminal 1 that is connected before the pause is stored in the CellID. According to the present embodiment, because the radio terminal 1 stores "10" as the CellID before the pause, the radio terminal 1 transmits "10", with "10" being stored in the CellID in the RRC Connection Request.

When receiving the RRC Connection Request, the radio base station 2b checks the Cause value of the RRC Connection Request. If the Cause value indicates "returning from the pause", (in a case of the Spare 3 according to the present embodiment), the radio base station 2b recognizes that the radio terminal 1 performs the returning from the pause.

If the Cause value indicates "returning from the pause", the radio base station 2b compares the CellID stored in the RRC Connection Request with the radio base station's own ID. Because the example in FIG. 5 is a case where different radio base stations 2 make connections before and after the radio terminal 1 is in the pause, respectively, a result of the comparison is obtained that the CellID ("10" as described above, according to the present embodiment) in the received RRC Connection Request and the radio base station's own ID ("20" according to the present embodiment) are different from each other.

If the value of the CellID and the radio base station's own ID are different from each other in the RRC Connection Request, the radio base station 2b determines that the radio terminal 1 that is connected to the different radio base station 2 performs the returning from the pause. Moreover, unlike the case in FIG. 5, if the value of the CellID and the radio base station 2b's own ID are the same, the radio base station 2b determines that the radio terminal 1 that was earlier connected to the radio base station 2b performs the returning from the pause. Based on the result of the determination (the result of the comparison), the radio base station 2b assigns a value of a Change Cell, which is an internal parameter that indicates a result of the determination that is based on the Cell ID. If it is determined that the radio terminal 1 that is connected to the different radio base station 2 performs the returning from the pause, the radio base station 2b assigns "1" that is a value indicating the presence of a change of the radio base station to the Change Cell. Furthermore, if it is determined that the radio terminal 1 that was earlier connected to the radio base station 2b performs the returning from the pause, the radio base station 2b assigns "0" that is a value indicating the absence of the change of the radio base station to the Change Cell. In the case in FIG. 5, "1" is assigned to the Change Cell.

Furthermore, if it is determined that the radio terminal 1 that is connected to the different radio base station 2 performs the returning from the pause, the radio base station 2b assigns a value of the CellID in the RRC Connection Request to the Source CellID that is the internal parameter. In the case in FIG. 5, "10" is assigned to a Source Cell ID.

At this point, the radio base station 2b ensures the RRC connection resource (the Uu resource) and sets up the RRC connection, which is the same as the call setup processing in the related art. Then, when the setup of the RRC connection is successful, the radio base station 2b replies to the radio terminal 1 with the RRC Connection Setup (S502). When receiving the RRC Connection Setup, the radio terminal 1 performs the setup relating to the RRC connection according to the setup parameters that are set in the RRC Connection Setup. Accordingly, the radio terminal 1 is in a state of the RRC connection. Then, the radio terminal 1 replies to the radio base station 2b with the RRC Connection Setup Complete (S503).

After this, many messages in the call setup processing in the related art may be omitted. At this point, all the messages from the Initial UE Message that is transmitted to the mobile management entity 3 by the radio base station 2b to a Security Complete that is transmitted to the radio base station 2b by the radio terminal 1 are omitted, which is different from the call setup processing in the related art.

First, the radio base station 2b refers to a value of a Change Request, which is the internal parameter and which indicates the result of the determination that is based on the CellID. Then, if the Change Request is "1" indicating the presence of the change, the radio base station 2b transmits to the radio base station 2a a message that makes a request to the radio base station 2a for the S1 setup information (S504). The message that makes a request to the different radio base station 2a for the S1 setup information is absent in call setup processing in the related art, and according to the present embodiment, as one example, such a message is set to be an S1 Configuration Send Request. A Source Cell ID ("10" according to the present embodiment) that is the internal parameter is assigned to a destination of the S1 Configuration Send Request.

Moreover, unlike in the case in FIG. 5, if the Change Request is "0" indicating the absence of the change, the radio base station 2b does not perform the transmission of the S1 Configuration Send Request. Instead of that, the radio base station 2b reads the S1 setup information stored in the call release processing and uses the SI setup information being read in the setup of the S1 resource.

Referring back to FIG. 5, when receiving the S1 Configuration Send Request, the radio base station 2a transmits to the radio base station 2b a message for notifying the S1 setup information (S505). The message that notifies the different radio base station 2 of the S1 setup information is absent in the call setup processing in the related art, and according to the present embodiment, as one example, such a message is set to be an S1 Configuration Send Response. The radio base station 2a transmits to the radio base station 2b the S1 setup information stored in the call release processing, with the S1 setup information being stored in the S1 Configuration Send Response.

On the other hand, after transmitting the RRC Connection Setup Complete, the radio terminal 1 performs the setup that is based on a message that is omitted according to the present embodiment, based on the radio terminal side setup information, which is stored in the call release processing. Specifically, the radio terminal 1 performs the setup of the security mode relating to the NAS, based on the information equivalent to the Security Mode Command (NAS) that is included in the radio terminal side setup information. Furthermore, the radio terminal 1 performs the setup of the security mode relating to the RRC, based on the information equivalent to the Security Mode Command (RRC) that is included in the radio terminal side setup information. Accordingly, the radio terminal 1 is ready for the reception of the RRC Connection Reconfiguration.

When receiving the S1 Configuration Send Response, the radio base station 2b obtains the S1 setup information that is stored in the S1 Configuration Send Response. Then, the radio base station 2b transmits the RRC Connection Reconfiguration to the radio terminal 1 (S506). The radio base station 2b in the call setup processing in the related art stores the Attach Accept received from the mobile management entity 3 in the RRC Connection Reconfiguration. However, the radio base station 2b according to the present embodiment does not receive the Attach Accept from the mobile management entity 3. Then, the radio base station 2b according to the present embodiment may not store the Attach Accept in the RRC Connection Reconfiguration.

According to the reception of the RRC Connection Reconfiguration, the radio terminal 1 performs the re-setup of the RRC connection. In the call setup processing in the related art, the re-setup of the RRC connection is performed based on the Attach Complete that is included in the RRC Connection Reconfiguration, but according to the present embodiment, the Attach Accept is not stored in the RRC Connection Reconfiguration. Then, according to the present embodiment, the radio terminal 1 reads the radio terminal side setup information, which is stored in the call release processing and performs the re-setup of the RRC connection. Because the radio terminal 1 stores the information corresponding to the information that is included in the Attach Accept, as the radio terminal side setup information, in the call release processing, such handling is possible.

Then, the radio terminal 1 transmits the RRC Connection Reconfiguration Complete to the radio base station 2b (S507). At this time, the radio terminal 1 may not store the Attach Complete in the RRC Connection Reconfiguration Complete, which is different from the call setup processing in the related art.

According to the reception of the RRC Connection Reconfiguration Complete, the radio base station 2b performs processing different from the call setup processing in the related art.

First, if the Change Request that is the internal parameter is "1" indicating the presence of the change, the radio base station 2b transmits to the mobile management entity 3 a Path Switch Request that is a message for switching a path (communication path) at the time of handover (S508). When receiving the Path Switch Request, the mobile management entity 3 switches a path through the radio base station 2a between the serving-gateway 4 and the radio terminal 1 to a path through the radio base station 2b between the serving-gateway 4 and the radio terminal 1. Because of this, the mobile management entity 3 performs the transmission (not illustrated) of the Modify Bearer Request to the serving-gateway 4 and the reception (not illustrated) of the Modify Bearer Response from the serving-gateway 4. Then, the mobile management entity 3 transmits to the radio base station 2b a Path Switch Request Acknowledge that is a message indicating that the path switching is completed (S509).

Moreover, unlike in the case in FIG. 5, if the Change Request is "0" indicating the absence of the change, the radio base station 2b does not perform the transmission of the Path Switch Request and the reception of Path Switch Request Acknowledge.

Furthermore, the radio base station 2b does not perform the transmission of the Initial Context Setup Response according to the reception of the RRC Connection Reconfiguration Complete, which is different from the call setup processing in the related art. This is because the Initial Context Setup Request that is a pre-condition for the Initial Context Setup Response is not received.

When receiving the Path Switch Request Acknowledge, the radio base station 2b performs the setup of the S1 resource using the earlier-obtained S1 setup information and the like.

Last, if the Change Request that is the internal parameter, is "1" indicating the presence of the change, the radio base station 2b transmits to the radio base station 2a a radio terminal 1 Content Release that is a message that requests the release of the S1 resource, which is different from the call setup processing in the related art (S510). When receiving the radio terminal 1 Content Release, the radio base station 2a releases the retained S1 resource.

Moreover, unlike in the case in FIG. 5, if the Change Request is "0" indicating the absence of the change, the radio base station 2b does not perform the transmission of the Content Release.

As described above, the call setup processing is completed, the preparation for resumption of communication by the radio terminal 1 is finished, and the radio terminal 1 and the radio communication network are in communication. That is, the Uu resource between the radio terminal 1 and the radio base station 2b is set up by the call setup processing described above. Furthermore, a state is entered in which the S1 resource is set up between the radio base station 2b and the mobile management entity 3/ the serving-gateway 4 and the S1 resource between the radio base station 2a and the mobile management entity 3/ the serving-gateway 4 is released. Accordingly, the radio terminal 1 can resume user data communication through the radio base station 2b.

As described above, according to the present embodiment, as illustrated in FIG. 5, the amount of the messages can be reduced in the call setup processing, compared to the call setup processing in the related art.

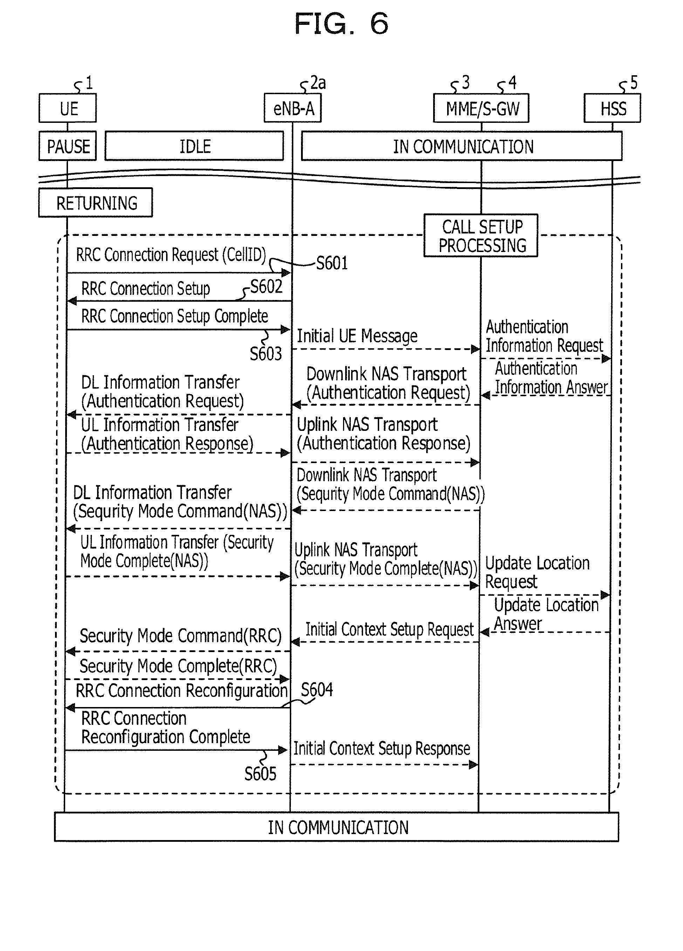

FIG. 6 is a diagram illustrating another example of the sequence of operations in the call release processing according to the present embodiment. Whereas the example in FIG. 5 corresponds to a case where the different radio base stations 2 make connections before and after the radio terminal 1 is in the pause (eNB-A and eNB-B), respectively, the example in FIG. 6 corresponds to a case where the same radio base station 2 makes a connection before and after the radio terminal 1 is in the pause (eNB-A). The sequence of operations in FIG. 6 has a lot of processing in common with the sequence of operations in FIG. 5, except that the radio base station 2 that is the connection destination of the radio terminal 1 is the same radio base station 2a (eNB-A in the drawings) as is available before the pause. Because of this, at this point, only processing different from the processing in FIG. 5 is described.

In FIG. 6, the radio terminal 1 transmits to the radio base station 2a the RRC Connection Request in which "10" is assigned as the value of the CellID (S601). When receiving the RRC Connection Request from the radio terminal 1, the radio base station 2a compares "10" that is the value of the CellID included in the RRC Connection Request, with "10" that is the radio base station 2a's own ID. In this case, because both values are the same, the radio base station 2a sets the value of the Cell Change, which is the internal parameter, to "0" indicating the absence of the change of the radio base station.

If the Cell Change, that is, information on the radio terminal 1 is "0" that corresponds to the absence of the change of the radio base station 2, the radio base station 2a does not have to make a request to the different radio base station for the S1 setup information. This is because the S1 setup information retained in the radio base station 2a itself may be used. Therefore, in this case, unlike in FIG. 5, the radio base station 2a does not perform the transmission of the S1 Configuration Send Request and the reception of the S1 Configuration Send Response.

When the radio base station 2a receives the RRC Connection Reconfiguration Complete, if the Cell Change, that is, the information on the radio terminal 1 is "0" that corresponds to the absence of the change of the radio base station, the path between the serving-gateway 4 and the radio terminal 1 does not have to be switched. Therefore, the radio base station 2a does not perform the transmission of the Path Switch Request and the reception of the Path Switch Request Acknowledge.

If the Cell Change, that is, the information on the radio terminal 1, is "0" that corresponds to the absence of the change of the radio base station, the radio base station 2a does not have to make a request to the different radio base station 2 for the release of the S1 resource. Because of this, the radio base station 2a does not perform the transmission of the Content Release to the radio terminal 1.

As described above, according to the present embodiment, also in the case in FIG. 6, the amount of the messages in the call setup processing can be reduced in the same manner as in FIG. 5, compared to the call setup processing in the related art.

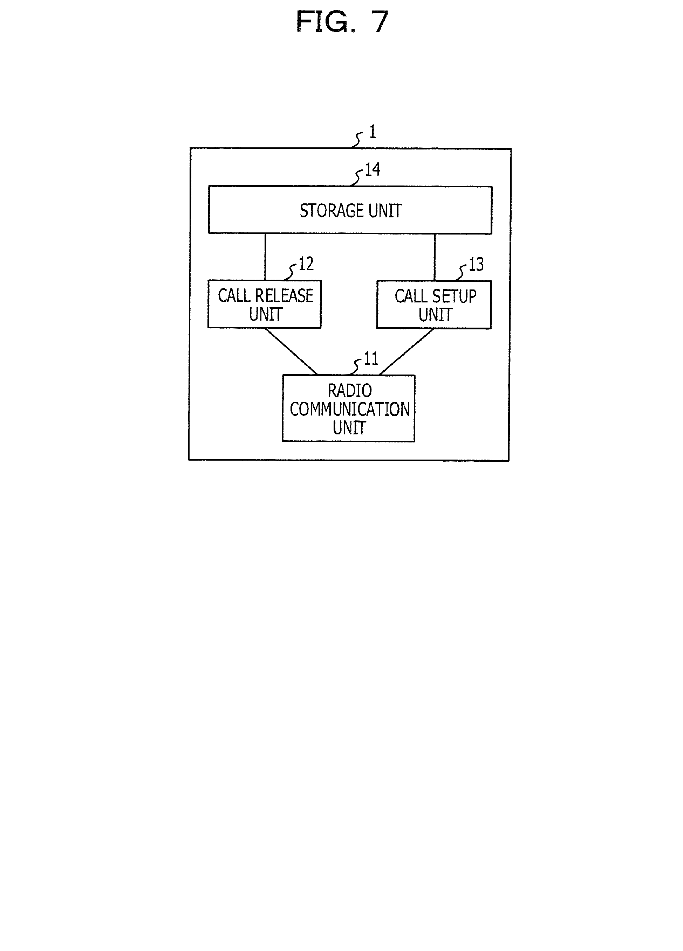

Next, a functional configuration and a hardware configuration of each apparatus in the radio communication system according to the present embodiment is described referring to FIGs. 7 to 14.

FIG. 7 illustrates one example of the functional configuration of the radio terminal 1 according to the present embodiment. The radio terminal 1 includes, for example, a radio communication unit 11, a call release unit 12, a call setup unit 13, and a storage unit 14.

The radio communication unit 11 performs radio communication with the radio base station 2. For example, the radio communication unit 11 performs the transmission of the RRC Signaling Connection Release Indication illustrated in FIG. 4, the reception of the RRC Connection Release and the transmission of the RRC Connection Release Complete, with respect to the radio base station 2 through a radio signal. Furthermore, for example, the radio communication unit 11 performs the transmission of the RRC Connection Request, the reception of the RRC Connection Setup, the transmission of the RRC Connection Setup Complete, the reception of the RRC Connection Reconfiguration, and the transmission of the RRC Connection Reconfiguration Complete that are illustrated in FIGs. 5 and 6, with respect to the radio base station 2 through a radio signal. Furthermore, for example, the radio communication unit 11 performs the transmission and the reception of all information that includes a control message or user data other than these and that is transmitted to and received from the radio base station 2 as the other party, through the radio signal.

The call release unit 12 performs the processing at the radio terminal 1 side in the call release processing illustrated as one example in FIG. 4. For example, the call release unit 12 performs processing entailed by the transmission of the RRC Signaling Connection Release Indication, processing entailed by the reception of the RRC Connection Release, and processing entailed by the transmission of the RRC Connection Release Complete. The call release unit 12 performs various control processes, that is, referencing (reading), changing (writing), removing and the like, on the information that is stored in the storage unit 14, as occasion calls.

The call setup unit 13 performs the processing at the radio terminal 1 side in the call setup processing illustrated as one example in FIGs. 5 and 6. For example, the call setup unit 13 performs processing entailed by the transmission of the RRC Connection Request, processing entailed by the reception of the RRC Connection Setup, processing entailed by the transmission of the RRC Connection Setup Complete, processing entailed by the reception of the RRC Connection Reconfiguration, and processing entailed by the transmission of the RRC Connection Reconfiguration Complete. The call setup unit 13 performs the various control processes, that is, the referencing (reading), the changing (writing), the removing, and the like, on the information that is stored in the storage unit 14, as occasion calls.

The storage unit 14 stores various pieces of information that are used in the processing that is performed by the call release unit 12 or the call setup unit 13. For example, the storage unit 14 stores the radio terminal side setup information that is described above. Furthermore, for example, the storage unit 14 stores the CellID described above. Furthermore, for example, the storage unit 14 can store arbitrary setup information or control information other than these.

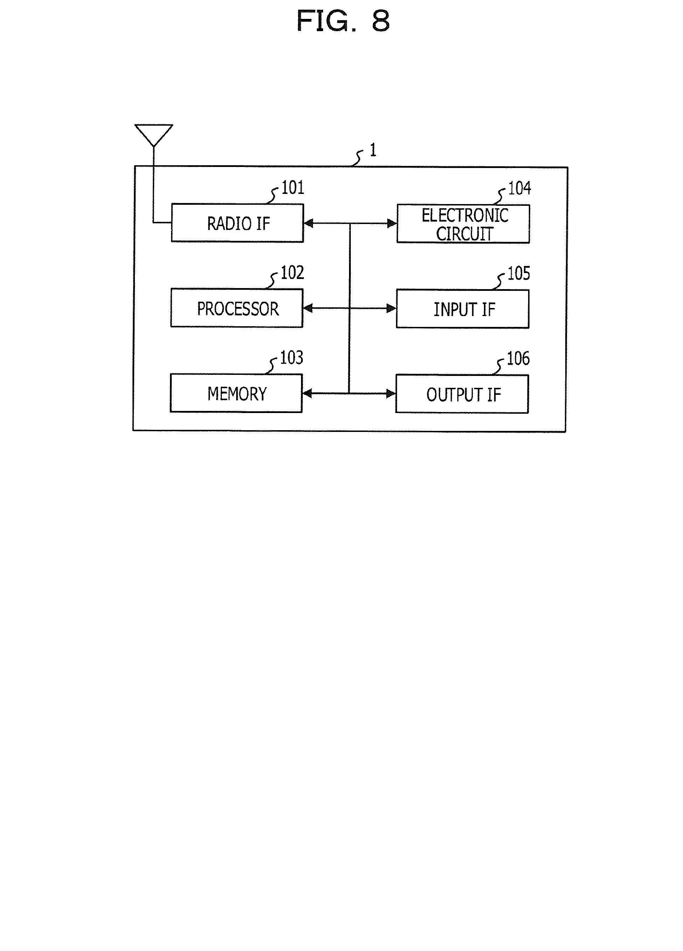

FIG. 8 illustrates one example of the hardware configuration of the radio terminal 1 according to the present embodiment. Each function of the radio terminal 1 is realized by some of, or all of the hardware components described below. The radio terminal 1 described above, according to the embodiment includes a radio IF (interface) 101, a processor 102, a memory 103, an electronic circuit 104, an input IF 105, an output IF 106, and the like. The radio IF 101 is an interface device for performing radio communication with the radio base station 2 and, for example, is an antenna. The processor 102 is a device for processing data, and, for example, includes a central processing unit (CPU), a digital signal processor (DSP), and the like. The memory 103 is a device that stores data and, for example, includes a read only memory (ROM), a random access memory (RAM), and the like. The electronic circuit 104 includes, for example, a large scale integration (LSI), a field-programming gate array (FPGA), an application specific integrated circuit (ASIC), and the like. The input IF 105 is a device that performs inputting and, for example, includes operational buttons, a microphone and the like. The output IF 106 is a device that performs outputting and, for example, includes a display, a speaker, and the like.

A correspondence relationship between the functional configuration and the hardware configuration of the radio terminal 1 is described. The radio communication unit 11 is realized, for example, by the radio IF 101 and the electronic circuit 104. The call release unit 12 is realized, for example, by the processor 102 and the electronic circuit 104. That is, the processor 102 realizes the call release unit 12 by controlling the storage unit 14 as occasion calls and performing the processing entailed by the transmission of the RRC Signaling Connection Release Indication, the processing entailed by the reception of the RRC Connection Release, and the processing entailed by the transmission of the RRC Connection Release Complete. Furthermore, the call setup unit 13 is realized by controlling the storage unit 14 as occasion calls and for example, by the processor 102 and the electronic circuit 104. That is, the processor 102 realizes the call setup unit 13 by performing the processing entailed by the transmission of the RRC Connection Request, the processing entailed by the reception of the RRC Connection Setup, the processing entailed by the transmission of the RRC Connection Setup Complete, the processing entailed by the reception of the RRC Connection Reconfiguration, and the processing entailed by the transmission of the RRC Connection Reconfiguration Complete. The storage unit 14 is realized, for example, by the memory 103.

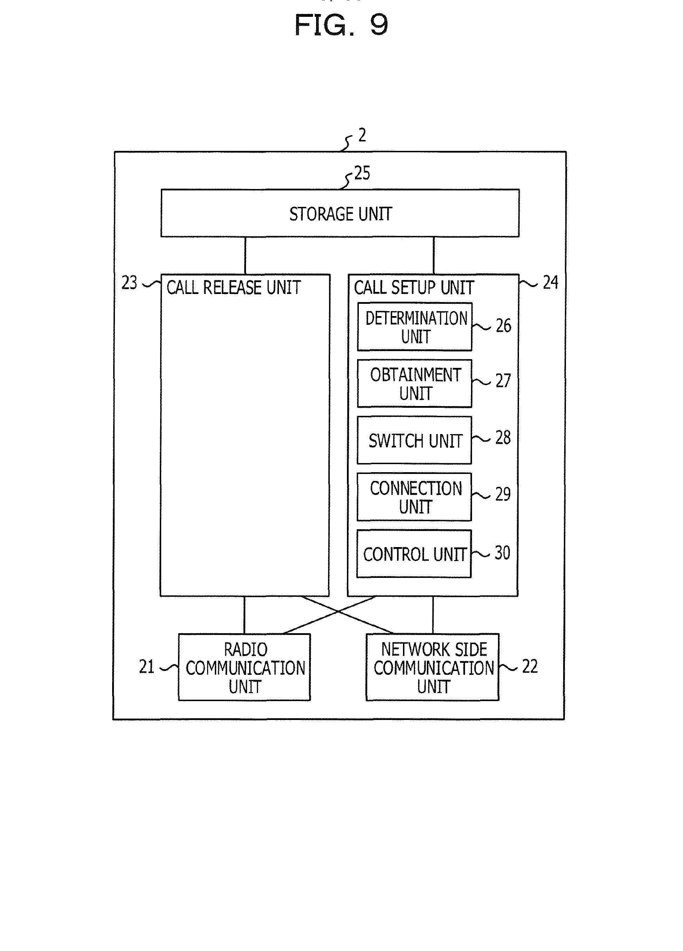

FIG. 9 illustrates the functional configuration of the radio base station 2 according to the present embodiment. The radio base station 2 includes, for example, a radio communication unit 21, a network side communication unit 22, a call release unit 23, a call setup unit 24, and a storage unit 25. Moreover, the call setup unit 24 includes, for example, a determination unit 26, an obtainment unit 27, a switch unit 28, a connection unit 29, and a control unit 30.

The radio communication unit 21 performs the radio communication with the radio terminal 1. For example, the radio communication unit 21 performs the reception of the RRC Signaling Connection Release Indication, the transmission of the RRC Connection Release, and the reception of the RRC Connection Release Complete that are illustrated in FIG. 4, with respect to the radio terminal 1 through the radio signal. Furthermore, for example, the radio communication unit 21 performs the reception of the RRC Connection Request, the transmission of the RRC Connection Setup, the reception of the RRC Connection Setup Complete, the transmission of the RRC Connection Reconfiguration, and the reception of the RRC Connection Reconfiguration Complete that are illustrated in FIGs. 5 and 6, with respect to the radio terminal 1 through the radio signal. Furthermore, for example, the radio communication unit 21 performs the transmission and the reception of all information that includes the control message or the user data other than these and that is transmitted to and received from the radio terminal 1 as the other party, through the radio signal.

The network side communication unit 22 performs cable communication or radio communication with a network side apparatus that includes the different radio base station 2, the mobile management entity 3, and the serving-gateway 4. For example, the network side communication unit 22 performs the transmission or the reception of the S1 Configuration Send Request to and from the different radio base station 2, the reception or the transmission of the S1 Configuration Send Response from and to the different radio base station 2, the transmission of the Path Switch Request to the mobile management entity 3, the reception of the Path Switch Request Acknowledge from the mobile management entity 3, and the transmission or the reception of the UE Context Release to or from the different radio base station 2, which are illustrated in FIGs. 5 and 6 through the cable signal or the radio signal. Furthermore, for example, the network side communication unit 22 performs the transmission and the reception of all information that includes the control message or user data other than these and that is transmitted to and received from the network side apparatus as the other party, through the cable signal or the radio signal.

The call release unit 23 performs the processing that is performed by the radio base station 2a in the call release processing illustrated as one example in FIG. 4. For example, the call release unit 23 performs the processing entailed by the reception of the RRC Signaling Connection Release Indication, the processing entailed by the transmission of the RRC Connection Release, and the processing entailed by the reception of the RRC Connection Release Complete. The call release unit 23 performs various control processes, that is, the referencing (reading), the changing (writing), the removing and the like, on the information that is stored in the storage unit 25, as occasion calls.

The call setup unit 24 performs the processing that is performed by the radio base station 2b or the radio base station 2a in the call setup processing illustrated as one example in FIGs. 5 and 6. For example, the call setup unit 24 performs processing entailed by the reception of the RRC Connection Request, processing entailed by the transmission of the RRC Connection Setup, processing entailed by the reception of the RRC Connection Setup Complete, processing entailed by the transmission or the reception of the S1 Configuration Send Request, processing entailed by the reception or the transmission of the S1 Configuration Send Response, processing entailed by the reception or the transmission of the Path Switch Request, processing entailed by the reception of the Path Switch Request Acknowledge, and processing entailed by the transmission or the reception of the UE Context Release. The call setup unit 24 performs the various control processes, that is, the referencing (reading), the changing (writing), the removing and the like, on the information that is stored in the storage unit 25, as occasion calls.

The determination unit 26 performs various determinations that are performed in the radio base station 2b or the radio base station 2a in the call setup processing illustrated as one example in FIGs. 5 and 6. As one example, the determination unit 26 determines whether the radio terminal 1 performs the returning from the pause, based on the Cause value that is included in the RRC Connection Request. As one example, the determination unit 26 determines whether the radio terminal 1 that performs the returning after the pause is connected to the different radio base station 2 or is connected to the radio base station 2 before the pause, based on the CellID value that is included in the RRC Connection Request and on the radio base station 2's own ID. The determination unit 26 performs the various control processes, that is, the referencing (reading), the changing (writing), the removing, and the like, on the information that is stored in the storage unit 25, as occasion calls.

The obtainment unit 27 performs the processing that obtains the S1 setup information, which is performed by the radio base station 2b in the call setup processing illustrated as one example in FIG. 5. As one example, the obtainment unit 27 performs the transmission of the S1 Configuration Send Request and the reception of the S1 Configuration Send Response, and obtains the S1 setup information. The obtainment unit 27 performs the various control processes, that is, the referencing (reading), the changing (writing), the removing, and the like, on the information that is stored in the storage unit 25, as occasion calls.

The switch unit 28 performs switching of the path through the radio base station 2a between the serving-gateway 4 and the radio terminal 1 to the path through the radio base station 2b between the serving-gateway 4 and the radio terminal 1, in the call setup processing illustrated as one example in FIG. 5. As one example, the switch unit 28 performs the transmission of the Path Switch Request and the reception of the Path Switch Request Acknowledge, and performs the switching of the path between the serving-gateway 4 and the radio terminal 1. The switch unit 28 performs the various control processes, that is, the referencing (reading), the changing (writing), the removing, and the like, on the information that is stored in the storage unit 25, as occasion calls.

The connection unit 29 performs the processing that couples the radio terminal 1 and the radio communication network, which is performed by the radio base station 2a or the radio base station 2b in the call setup processing illustrated as one example in FIGs. 5 and 6. As one example, the connection unit 29 couples the radio terminal 1 and the radio communication network by performing the processing that sets up the Uu resource after the reception of the RRC Connection Setup Complete and by setting up the S1 resource after the reception of the Path Switch Request Acknowledge. The connection unit 29 performs the various control processes, that is, the referencing (reading), the changing (writing), the removing, and the like, on the information that is stored in the storage unit 25, as occasion calls.

The control unit 30 performs the various control processes that are performed by the radio base station 2a or the radio base station 2b in the call setup processing illustrated as one example in FIGs. 5 and 6. As one example, the control unit 30 controls the determination unit, the obtainment unit, the switch unit, and the connection unit. The control unit 30 performs the various control processes, that is, the referencing (reading), the changing (writing), the removing, and the like, on the information that is stored in the storage unit 25, as occasion calls.

The storage unit 25 stores various pieces of information that are used in the control that is performed by the call release unit 23, the call setup unit 24, or the like. For example, the storage unit 25 stores the S1 setup information described above. Furthermore, for example, the storage unit 25 stores the Change Cell or the Source Cell ID, which is the internal parameter described above. Furthermore, for example, the storage unit 25 can store arbitrary setup information or control information other than these.

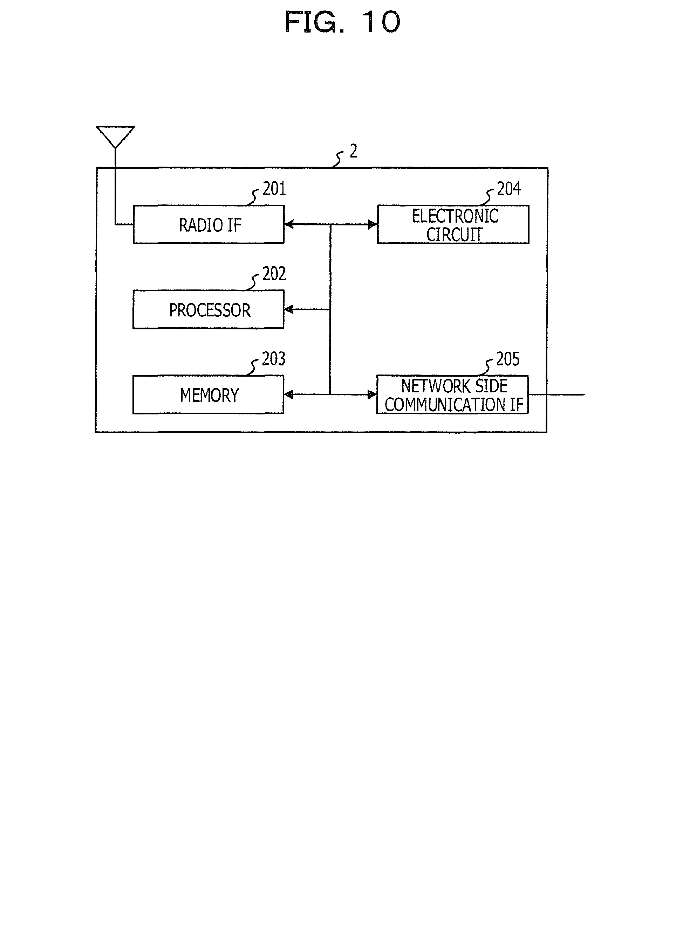

FIG. 10 illustrates one example of a hardware configuration of the radio base station 2 according to the present embodiment. Each function of the radio base station 2, described above, is realized by some of or all of the hardware components described below. The radio base station 2 described above, according to the embodiment includes a radio interface (IF) 201, a processor 202, a memory 203, an electronic circuit 204, a network side communication IF 205, and the like. The radio IF 201 is an interface device for performing the radio communication with the radio terminal 1, and, for example, is an antenna. The processor 202 is a device that processes data and, for example, includes a central processing unit (CPU), a digital signal processor (DSP) and the like. The memory 203 is a device that stores data and, for example, includes a read only memory (ROM), a random access memory (RAM), and the like. The electronic circuit 204 includes, for example, a large scale integration (LSI), a field-programming gate array (FPGA), an application specific integrated circuit (ASIC), and the like. The network side communication IF 205 is an interface device for performing the cable communication or the radio communication with the network side apparatus that includes the different radio base station 2, the mobile management entity 3, and the serving-gateway 4, over a cable link or a radio link that is connected to a network (that is, a backhaul network) at the mobile phone system network side.

A correspondence relationship between the functional configuration and the hardware configuration of the radio base station 2 is described. The radio communication unit 21 is realized, for example, by the radio IF 201 and the electronic circuit 204. The network side communication unit 22 is realized, for example, by the network side communication IF 205, and the electronic circuit 204. The call release unit 23 is realized, for example, by the processor 202, and the electronic circuit 204. That is, the processor 202 realizes the call release unit 23 by controlling the storage unit 25 as occasion calls and performing the processing entailed by the reception of the RRC Signaling Connection Release Indication, the processing entailed by the transmission of the RRC Connection Release, and the processing entailed by the reception of the RRC Connection Release Complete. Furthermore, the call setup unit 24 is realized, for example, by the processor 202 and the electronic circuit 204. That is, the processor 202 realizes the call setup unit 24 by controlling the storage unit 25 as occasion calls and performing processing entailed by the reception of the RC Connection Request, processing entailed by the transmission of the RRC Connection Setup, processing entailed by the reception of the RRC Connection Setup Complete, processing entailed by the transmission or the reception of the S1 Configuration Send Request, processing entailed by the reception or the transmission of the S1 Configuration Send Response, processing entailed by the reception or the transmission of the Path Switch Request, processing entailed by the reception of the Path Switch Request Acknowledge, and processing entailed by the transmission or the reception of the UE Context Release.

The determination unit 26 is realized, for example, by the processor 202, and the electronic circuit 204. That is, the processor 202 realizes the determination unit 206 by controlling the storage unit 25 as occasion calls and determining whether the radio terminal 1 performs the returning from the pause, based on the Cause value that is included in the RRC Connection Request. Furthermore, the processor 202 realizes the determination unit 26, by controlling the storage unit 25 as occasion calls, and determining whether the radio terminal 1 that performs the returning from the pause is connected to the different radio base station 2 or is connected to the radio base station 2 before the pause, based on the CellID value that is included in the RRC Connection Request and on the radio base station 2's own ID. The obtainment unit 27 is realized, for example, by the processor 202 and the electronic circuit 204. That is, the processor 202 realizes the obtainment unit 27 by controlling the storage unit 25 as occasion calls, performing the transmission of the S1 Configuration Send Request and the reception of the S1 Configuration Send Response, and obtaining the S1 setup information. The switch unit 28 is realized, for example, by the processor 202 and the electronic circuit 204. That is, the processor 202 realizes the switch unit 28 by controlling the storage unit 25 as occasion calls, performing the transmission of the Path Switch Request and the reception of the Path Switch Request Acknowledge, and performing the switching of the path between the serving-gateway 4 and the radio terminal 1. The connection unit 29 is realized, for example, by the processor 202 and the electronic circuit 204. That is, the processor 202 realizes the connection unit 29 by controlling the storage unit 25 as occasion calls, performing the processing that sets up the Uu resource after the reception of the RRC Connection Setup Complete and setting up the S1 resource after the reception of the Path Switch Request Acknowledge and thus by coupling the radio terminal 1 and the network. The control unit 30 is realized, for example, by the processor 202 and the electronic circuit 204. That is, the processor 202 realizes the control unit 30 by controlling the storage unit 25 as occasion calls and controlling the determination unit 26, the obtainment unit 27, the switch unit 28, and the connection unit 29.

The storage unit 25 is realized, for example, by the memory 203.

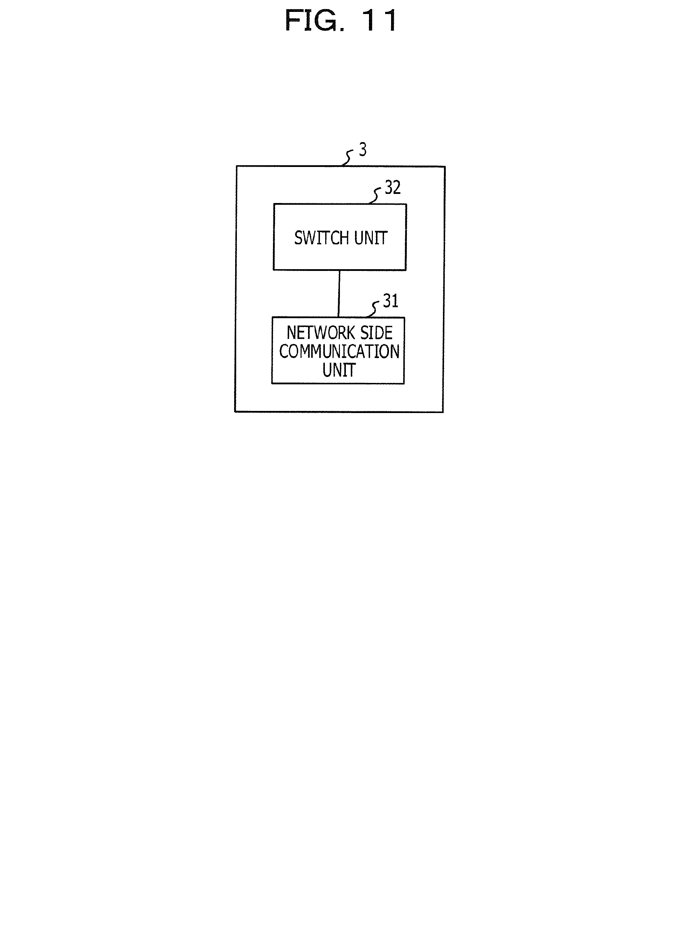

FIG. 11 illustrates a functional configuration of the mobile management entity 3 according to the present embodiment. The mobile management entity 3 includes, for example, a network side communication unit 31 and a switch unit 32.

The network side communication unit 31 performs the cable communication or the radio communication with the network side apparatus that includes the radio base station 2, the different mobile management entity 3, and the serving-gateway 4. For example, the network side communication unit 31 performs the reception of the Path Switch Request from the radio base station 2 illustrated in FIG. 5, the transmission (not illustrated) of the Modify Bearer Request to the serving-gateway 4, the reception (not illustrated) of the Modify Bearer Response from the serving-gateway 4, and the transmission of the Path Switch Request Acknowledge to the radio base station 2 that are illustrated in FIG. 5, through the cable signal or the radio signal. Furthermore, for example, the network side communication unit 31 performs the transmission and the reception of all information that includes the control message or the user data other than these and that is transmitted to and received from the network side apparatus as the other party, through the cable signal or the radio signal.

The switch unit 32 performs the switching of the path through the radio base station 2a between the serving-gateway 4 and the radio terminal 1 to the path through the radio base station 2b between the serving-gateway 4 and the radio terminal 1, in the call setup processing illustrated as one example in FIG. 5. As one example, the switch unit 32 performs the reception of the Path Switch Request, the transmission (not illustrated) of the Modify Bearer Request, the reception (not illustrated) of the Modify Bearer Response, and the transmission of the Path Switch Request Acknowledge, and performs the switching of the path between the serving-gateway 4 and the radio terminal 1.

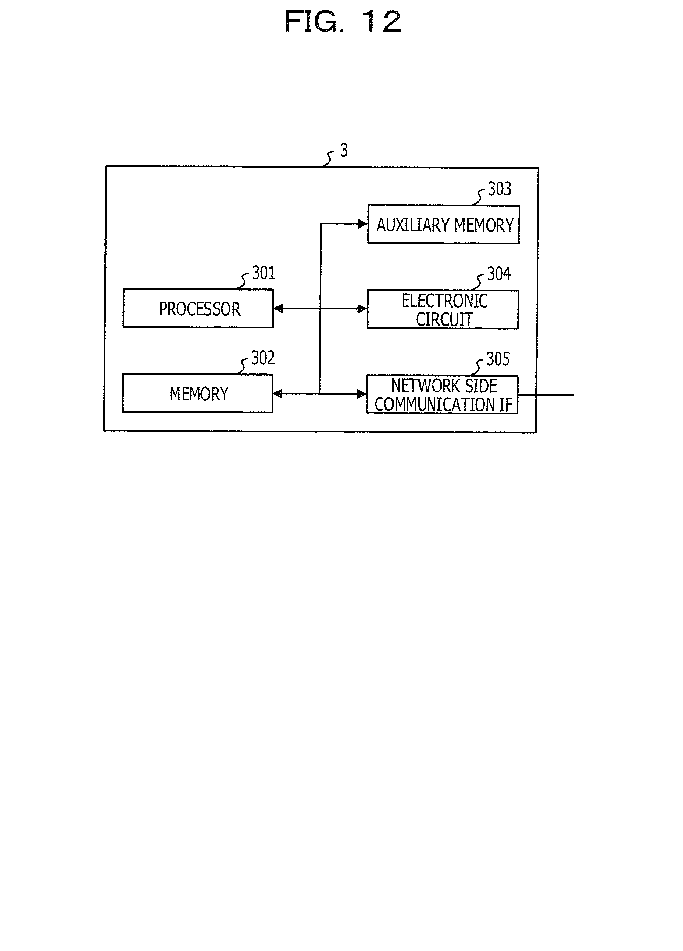

FIG. 12 illustrates one example of a hardware configuration of the mobile management entity 3 according to the present embodiment. Each function of the mobile management entity 3, described above, is realized by some of or all of the hardware components described below. The mobile management entity 3 described above, according to the embodiment includes a processor 301, a memory 302, an auxiliary memory 303, an electronic circuit 304, a network side communication IF 305, and the like. The processor 301 is a device that processes data and, for example, includes a central processing unit (CPU), a digital signal processor (DSP), and the like. The memory 302 is a device that stores data and, for example, includes a read only memory (ROM), a random access memory (RAM), and the like. The auxiliary memory 303 is a device that stores data in an auxiliary manner, and includes a hard disk drive (HDD), or various external storage media and a device that reads. The electronic circuit 304 includes, for example, a large scale integration (LSI), a field-programming gate array (FPGA), an application specific integrated circuit (ASIC), and the like. The network side communication IF 305 is an interface device for performing the cable communication or the radio communication with the network side apparatus that includes the radio base station 2, a different mobile management entity 3, and the serving-gateway 4, over a cable link or a radio link that is connected to a network (that is, a backhaul network) at the mobile phone system network side.

A correspondence relationship between the functional configuration and the hardware configuration of the mobile management entity 3 is described.

The network side communication unit 31 is realized, for example, by the network side communication IF 305, and the electronic circuit 303. The switch unit 32 is realized, for example, by the processor 301 and the electronic circuit 303. That is, the processor 301 realizes the switch unit 32 by performing the reception of the Path Switch Request, the transmission (not illustrated) of the Modify Bearer Request, the reception (not illustrated) of the Modify Bearer Response, and the transmission of the Path Switch Request Acknowledge, and performing the switching of the path between the serving-gateway 4 and the radio terminal 1.

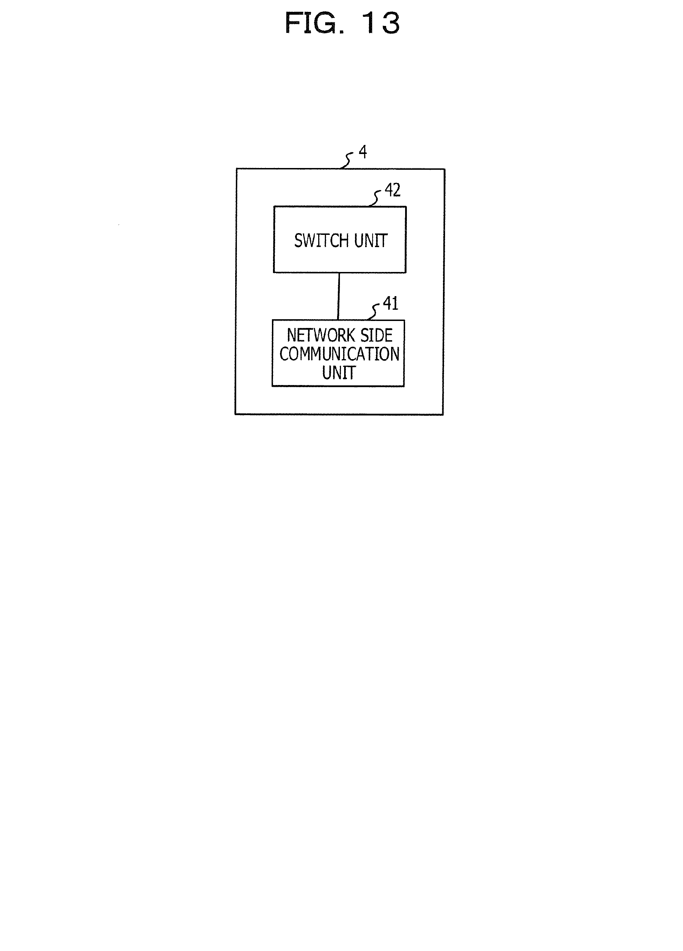

FIG. 13 illustrates a functional configuration of the serving-gateway 4 according to the present embodiment. The serving-gateway 4 includes, for example, a network side communication unit 41 and a switch unit 42.

The network side communication unit 41 performs the cable communication or the radio communication with the network side apparatus that includes the radio base station 2, the mobile management entity 3, and a different serving-gateway 4. For example, the network side communication unit 41 performs the reception (not illustrated) of the Modify Bearer Request from the mobile management entity 3 illustrated in FIG. 5 and the transmission (not illustrated) of the Modify Bearer Response to the mobile management entity 3. Furthermore, for example, the network side communication unit 41 performs the transmission and the reception of all information that includes the control message or the user data other than these and that is transmitted to and received from the network side apparatus as the other party, through the cable signal or the radio signal.

The switch unit 42 performs the switching of the path through the radio base station 2a between the serving-gateway 4 and the radio terminal 1 to the path through the radio base station 2b between the serving-gateway 4 and the radio terminal 1, in the call setup processing illustrated as one example in FIG. 5. As one example, the switch unit 42 performs the reception (not illustrated) of the Modify Bearer Request, the transmission (not illustrated) of the Modify Bearer Response, and performs the switching of the path between the serving-gateway 4 and the radio terminal 1.

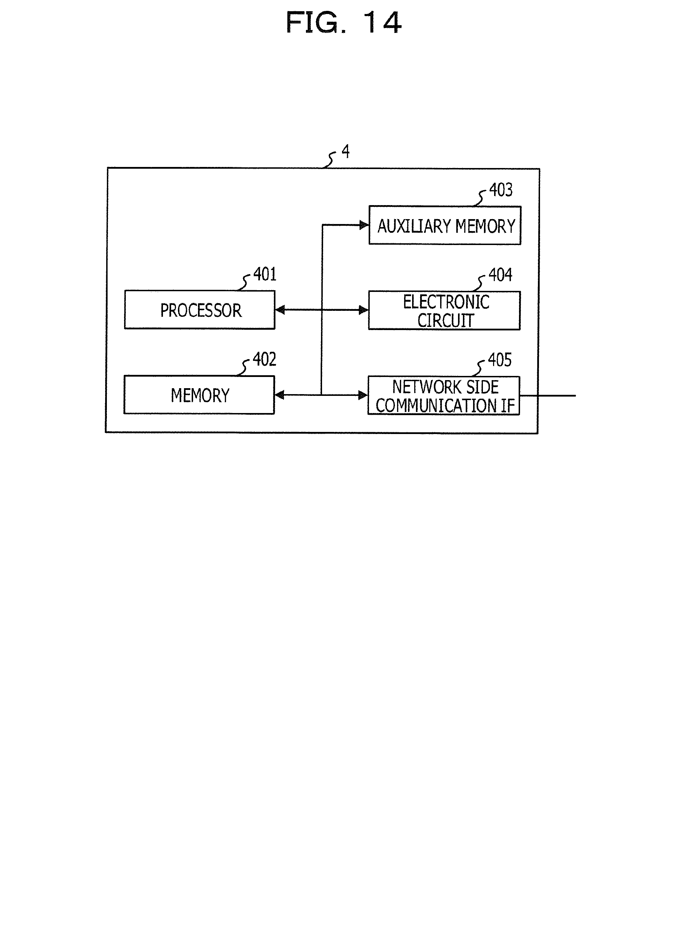

FIG. 14 illustrates one example of a hardware configuration of the serving-gateway 4 according to the present embodiment. Each function of the serving-gateway 4, described above, is realized by some of, or all of the hardware components described below. The serving-gateway 4 described above, according to the present embodiment includes a processor 401, a memory 402, an auxiliary memory 403, an electronic circuit 404, a network side communication IF 405, and the like. The processor 401 is a device for processing data, and, for example, includes a central processing unit (CPU), a digital signal processor (DSP), and the like. The memory 402 is a device that stores data and, for example, includes a read only memory (ROM), a random access memory (RAM), and the like. The auxiliary memory 403 is a device that stores data in an auxiliary manner, and includes a hard disk drive (HDD), or various external storage media and a device that reads them. The electronic circuit 404 includes, for example, a large scale integration (LSI), a field-programming gate array (FPGA), an application specific integrated circuit (ASIC), and the like. The network side communication IF 405 is an interface device for performing the cable communication or the radio communication with the network side apparatus that includes the radio base station 2, the mobile management entity 3, and the different serving-gateway 4, over a cable link or a radio link that is connected to a network (that is, a backhaul network) at the mobile phone system network side.

A correspondence relationship between the functional configuration and the hardware configuration of the serving-gateway 4 is described. The network side communication unit 41 is realized, for example, by the network side communication IF 405 and the electronic circuit 403. The switch unit 42 is realized, for example, by the processor 401 and the electronic circuit 403. That is, the processor 401 realizes the switch unit 42 by performing the reception of the Modify Bearer Request and the transmission of the Modify Bearer Response, and performing the switching of the path between the serving-gateway 4 and the radio terminal 1.

Next, the control message that is used in the radio communication system according to the present embodiment is described.

The RRC Signaling Connection Release Indication is a message by which the radio terminal 1 can notify the radio base station 2 that the RRC signaling connection present is released. The Cause region in which to store a cause for releasing the signaling connection is prepared in the RRC Signaling Connection Release Indication. If the proceeding to the pause state takes place, the radio terminal 1 stores the UE Requested PS Data session end in the Cause region of the RRC Signaling Connection Release Indication. Accordingly, when the radio base station 2 receives the RRC Signaling Connection Release Indication, if a value of the Cause region is the UE Requested PS Data session end, the radio base station 2 can recognize that the radio terminal 1 proceeds to the pause state. The RRC Connection Release is a message by which the radio base station 2 can instruct the radio terminal 1 to release the RRC connection.

The RRC Connection Release Complete is a message by which the radio terminal 1 can notify the radio base station 2 that the RRC connection is released.

The RRC Connection Request is a message by which the radio terminal 1 can request the radio base station 2 to set up the RRC connection. The Cause region in which to store a cause for setting up the RRC connection is prepared in the RRC Signaling Connection Release Indication. According to the present embodiment, a value indicating "returning from the pause" can be assigned to the Cause region in the RRC Connection Request. The value indicating "returning from the pause" is not prepared in the LTE system in the related art. As the value indicating "returning from the pause", a new value may be prepared and one, among spare values that are already prepared in the LTE system, may be prepared. According to the present embodiment, as one example, a Spare 3 that is a spare value is used as the value indicating "returning from the pause". Accordingly, when the radio base station 2 receives the RRC Connection Request, if the value of the Cause region is the Spare 3, the radio base station 2 can recognize that the radio terminal 1 performs the returning from the pause state.

Furthermore, the RRC Connection Request can include a region in which to store an identifier of a cell (the radio base station) to which the radio terminal 1 is connected before the pause. Such a region is not prepared in the LTE system in the related art. According to the present embodiment, as one example, the CellID region is prepared as such a region in the RRC Connection Request. The radio base station 2 that receives the RRC Connection Request can specify the cell to which the radio terminal 1 was connected before the pause by referring to the value of the CellID region.

The RRC Connection Setup is a message by which the radio base station 2 can set up the RRC connection with respect to the radio terminal 1. The RRC Connection Setup Complete is a message by which the radio terminal 1 can notify the radio base station 2 that the setup of the RRC connection is successfully completed.

The S1 Configuration Send Request is one example of a message by which the radio base station 2 can make a request to the different radio base station 2 for the S1 setup information. Such a message is not prepared in the LTE system in the related art. If the radio base station (cell) to which the radio terminal 1 is connected is changed before and after the radio terminal 1 is in the pause, with such a message, the radio base station 2 to which the radio terminal 1 is connected after the pause can make a request to the radio base station 2, to which the radio terminal 1 is connected before the pause, for the S1 setup information.

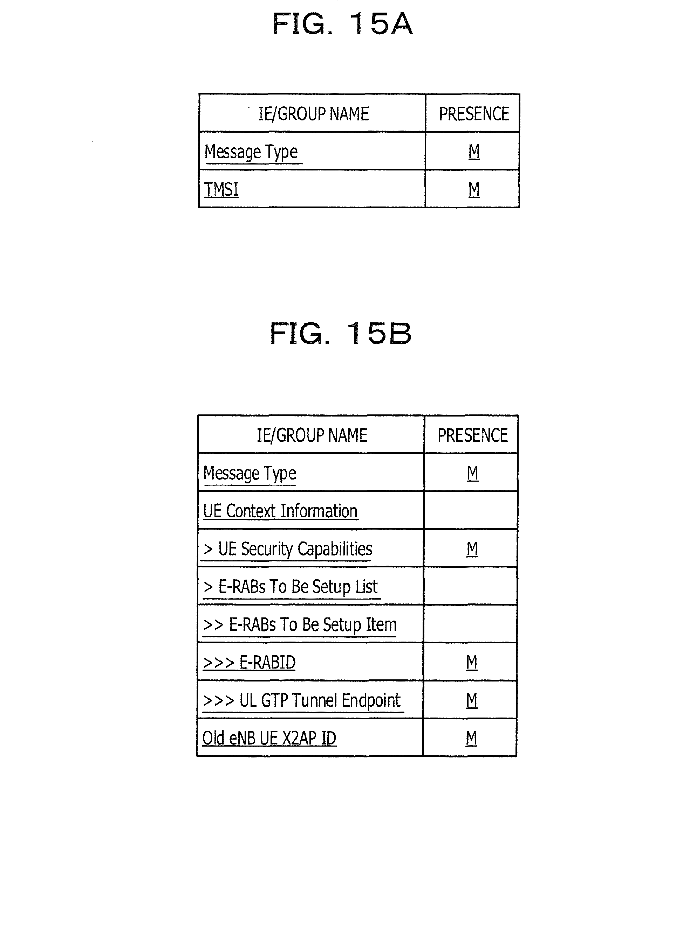

FIG. 15A illustrates one example of a format of the S1 Configuration Send Request. Moreover, in FIGs. 15A and 15B, an Information Element (IE)/Group Name column indicates a name of such a region. Furthermore, a value "M" in a Presence column indicates that such a region is mandatory (it is not an option).

The S1 Configuration Send Request, for example, includes a Message type region and a temporary mobile subscriber identity (TMSI) region. The Message Type is a region in which to store an identifier indicating that the message is the S1 Configuration Send Request. The TMSI is a region in which to store an identifier of the radio terminal 1. The S1 setup information is target information on the radio terminal 1. That is, the S1 Configuration Send Request is for requesting the S1 setup information on the radio terminal 1, which is designated in the TMSI region.

The S1 Configuration Send Response is one example of the message by which the radio base station 2 can notify the different radio base station 2 of the S1 setup information. Such a message is not prepared in the LTE system in the related art. If the radio base station (cell) to which the radio terminal 1 is connected is changed before and after the radio terminal 1 is in the pause, with such a message, the radio base station 2 to which the radio terminal 1 is connected before the pause can notify the radio base station 2, to which the radio terminal 1 is connected after the pause, of the S1 setup information, by answering the SI Configuration Send Request.

FIG. 15B illustrates one example of a format of the S1 setup information that is included in the S1 Configuration Send Response. Moreover, in FIG. 15B, a symbol ">" in the IE/Group Name column indicates that the region to which the symbol is assigned forms a nesting structure. Furthermore, the number of ">" indicates the level of the nesting.

The S1 Configuration Send Response includes, for example, a Message Type region, a UE Context Information region, and an Old radio base station radio terminal 1 × 2AP ID region. The Message Type is a region in which to store an identifier indicating that the message is the S1 Configuration Send Response.

The UE Context information is the UE context described above, and includes radio terminal 1 Security Capabilities and E-UTran Radio Access Bearers (E-RABs) To Be Setup List. The radio terminal 1 Security Capabilities is a region in which to store an encryption algorithm that is used between the radio base station and the radio terminal 1. The E-RABs To Be Setup List is a list of radio access bearers that have to be set up, and details thereof are omitted. The Old radio base station radio terminal 1 × 2AP ID is a region in which to store an identifier for identifying the radio terminal 1 between the radio base stations.

Moreover, information elements included in the S1 setup information described above are only examples. The S1 setup information may include some of the information elements described above, and may include information elements other than the ones described above.

The RRC Connection Reconfiguration is a message by which the radio base station 2 can instruct the radio terminal 1 to change the RRC connection. Such a message may include a measurement setup, mobility control, a radio resource setup, the NAS message, and a security setup.

The RRC Connection Reconfiguration Complete is a message by which the radio terminal 1 can notify the radio base station 2 that the change of the RRC connection is successfully completed.

The Path Switch Request is a message by which the radio base station 2 can request the mobile management entity 3 to switch the path between the serving-gateway 4 and the radio base station 2 to the path between the serving-gateway 4 and the different radio base station 2. In the LTE system, normally the Path Switch Request is used when the radio terminal 1 is at handover. According to the present embodiment, unlike in a normal case where the Path Switch Request is used in this manner, such a message as the Path Switch Request is used if the radio terminal 1 in the pause performs the returning, under the control of the different radio base station 2 from the radio base station 2 to which the radio terminal 1 is connected before the pause. Accordingly, the path between the serving-gateway 4 and the radio base station 2 can be switched, which appears to be normal handover from the perspective of a host station, such as the mobile management entity 3. Furthermore, complication in processing is avoided that arises from incorporating specifications for a new message or processing logic into the host station such as the mobile management entity 3.

The Path Switch Request Acknowledge is a message by which the mobile management entity 3 can indicate to the radio base station 2 that the switching of the path requested with the Path Switch Request is completed. In the LTE system, normally, the Path Switch Request Acknowledge is used when the radio terminal 1 is at handover. According to the present embodiment, unlike in a normal case where the Path Switch Request is used in this manner, such a message as the Path Switch Request is used if the radio terminal 1 in the pause performs the returning, under the control of the different radio base station 2 from the radio base station 2 to which the radio terminal 1 is connected before the pause. Accordingly, the same effect as when the Path Switch Request is used is obtained.

The UE Context Release is a message by which the radio base station 2 can make a request to the different radio base station 2 for the release of the UE context. In the LTE system, normally, the target radio base station 2 uses the UE Context Release with respect to the source radio base station 2 when the radio terminal 1 is at handover. According to the present embodiment, unlike in a normal case where the Path Switch Request is used in this manner, such a message as the Path Switch Request is used if the radio terminal 1 in the pause performs the returning, under the control of the different radio base station 2 from the radio base station 2 to which the radio terminal 1 is connected before the pause. Accordingly, the same effect as when the Path Switch Request is used is obtained.

The Modify Bearer Request is a message by which the mobile management entity 3 can request the serving-gateway 4 to change the S1-U interface of the radio base station 2. The Modify Bearer Response is a message by which the serving-gateway 4 can indicate to the mobile management entity 3 that the change of the S1-U interface of the radio base station 2 is completed according to the Modify Bearer Request.

Next, various pieces of information that are stored in each apparatus in the radio communication system according to the present embodiment are described.

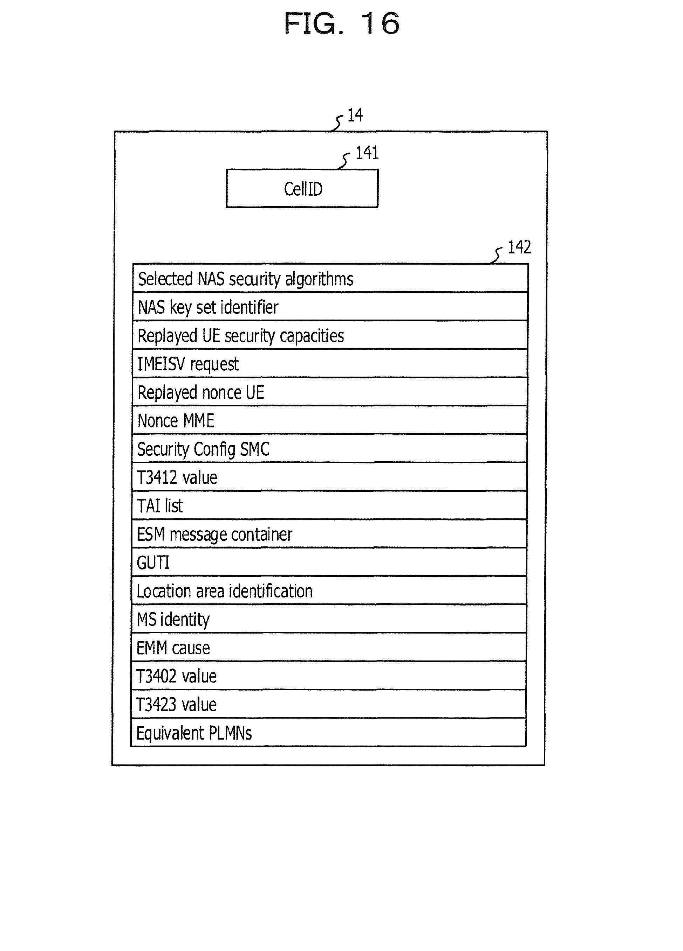

FIG. 16 illustrates one example of information that is stored in the storage unit 14 of the radio terminal 1. The storage unit 14 stores, for example, CellID 141 and radio terminal side setup information 142 that are the internal parameters.

The CellID 141 is the internal parameter that is stored in the call release processing in FIG. 4, and indicates the ID (that is, which corresponds to the identifier of the base station before the radio terminal is in the pause) of the cell in which the radio terminal 1 is located.

As described above, the radio terminal side setup information 142 is information that is stored without being released by the radio terminal 1 in the call release processing and that continues to be retained by the radio terminal 1 while in the pause.

The radio terminal side setup information 142 includes, for example, information elements (regions), such as Selected NAS security algorithms, NAS key set identifier, Replayed UE security capacities, IMEISV request, Replayed nonce UE, Nonce MME, Security Config SMC, T3412 value, TAI list, ESM message container, GUTI, Location area identification, MS identity, EMM cause, T3402 value, T3423 value, Equivalent PLMNs. These correspond to pieces of information that are included in the message that is received by the radio terminal 1 in the call setup processing (FIGs. 2 and 3) in the related art. Specifically, the Selected NAS security algorithms, the NAS key set identifier, the Replayed UE security capacities, the IMEISV request, the Replayed nonce UE, and the Nonce MME correspond to the pieces of information that are included in the Security Mode Command (NAS) that is received by the radio terminal 1 in the call setup processing in the related art. The Security Config SMC corresponds to the information that is included in the Security Mode Command (NAS) that is received by the radio terminal 1 in the call setup processing in the related art. The T3412 value, the TAI list, the ESM message container, the GUTI, the Location area identification, the MS identity, the EMM cause, the T3402 value, the T3423 value, and the Equivalent PLMNs correspond to the information that is included in the Attach Accept that is received by the radio terminal 1 in the call setup processing in the related art. A detailed description of each information element is omitted.

The radio terminal side setup information is the information that is retained by the radio terminal 1 that is engaged in communication. However, in the call release processing in the related art, the radio terminal 1 releases (erases) the radio terminal side setup information at the time of the pause. Because of this, in the call setup processing in the related art, the radio terminal 1 performs the obtainment again by receiving the 3 messages, the Security Mode Command (NAS), the Security Mode Command (RRC), and the Attach Accept.

In contrast, according to the present embodiment, in the call release processing, the radio terminal 1 does not release the radio terminal side setup information. Because of this, in the call setup processing, when the radio terminal 1 performs the returning, a predetermined procedure including the reception of the 3 messages, the Security Mode Command (NAS), the Security Mode Command (RRC), and the Attach Accept is possible to omit.

Moreover, the information elements included in the radio terminal side setup information described above are only examples. The radio terminal side setup information may include some of the information elements described above, and may include information elements other than the ones described above.

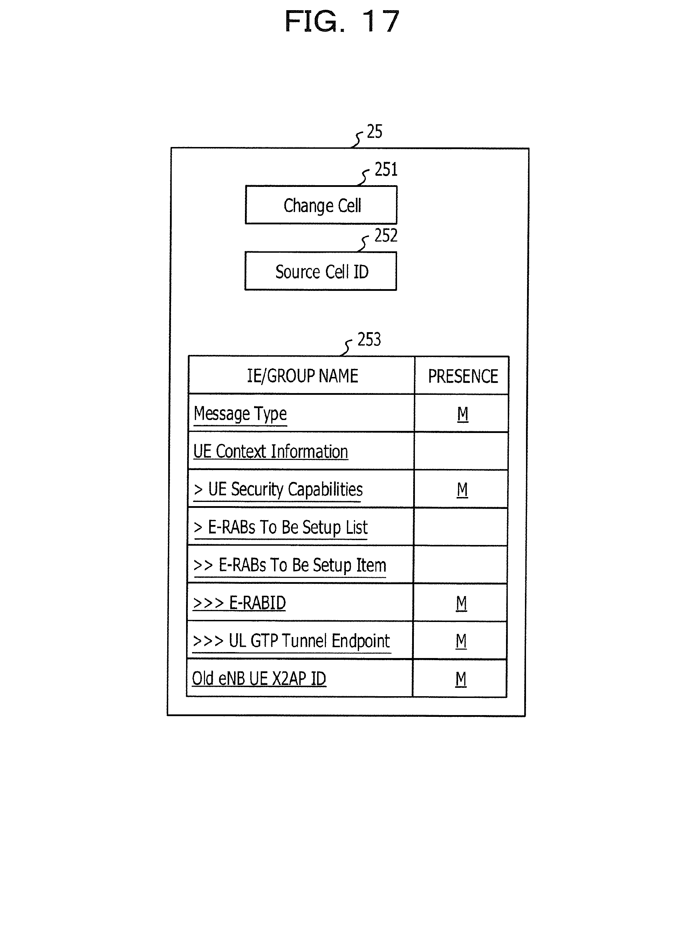

FIG. 17 illustrates one example of the information that is stored in the storage unit 25 of the radio base station 2. The storage unit 25 stores, for example, a Change Cell 251, a Source Cell ID 252, and S1 setup information 253 that are the internal parameters.

The Change Cell 251 is the internal parameter that is stored in the call setup processing in FIG. 5 or 6. If it is determined that the radio terminal 1 that is connected to the different radio base station performs the returning from the pause, the radio base station 2 assigns "1" that is a value indicating the presence of a change of the radio base station, to the Change Cell. Furthermore, if it is determined that the radio terminal 1 that was earlier connected to the radio base station 2 itself performs the returning from the pause, the radio base station 2 assigns "0" that is a value indicating the absence of the change of the radio base station to the Change Cell.

The Source Cell ID 252 is the internal parameter that is stored in the call setup processing in FIG. 5 or 6. The radio base station 2 assigns the value of the CellID in the received RRC Connection Request to the Source Cell ID 252.

As described above, the S1 setup information 253 is information that is stored without being released by the radio base station 2 in the call release processing and that continues to be retained by the radio base station 2 while the radio terminal is in the pause. Details of the S1 setup information 253 are the same as described above referring to FIG. 15B and a description thereof is omitted.

With the processing procedure described above, according to the embodiment, many messages in FIGs. 2 and 3 can be omitted compared to the call setup processing in the related art. Therefore, it is possible to suppress an increase in the amount of the messages that results from repeating the proceeding to the resumption of the communication by the radio terminal 1 from the pause state based on the Fast Dormancy function.

Furthermore, the information that is included in the message that is omitted from the call setup processing in the related art is used in the processing for the various setups or for ensuring the resource in each of the radio terminal 1 and the radio base station 2. In contrast, according to the present embodiment, in the call release processing, the retaining of the radio terminal side setup information by the radio terminal 1 without releasing the radio terminal side setup information and the retaining of the S1 setup information by the radio base station 2 without releasing the S1 setup information make possible the processing for the setup or for ensuring the resource, which is performed based on the message which is omitted in the related art.

Moreover, in the radio base station 2, even though the radio base station 2 that is the moving destination is changed before and after the radio terminal 1 is in the pause, the setup information being originally set in the omitted message or the resource is possible to ensure by the moving-destination radio base station 2 receiving the setup information from the moving-origin radio base station 2.

Therefore, according to the present embodiment, a reduction in the amount of the messages can be realized without damaging the function that is realized in the Fast Dormancy in the related art.

Variations according to each embodiment described above are described below.

According to the embodiment described above, in the call setup procedure, the radio base station 2b (FIG. 5) or the radio base station 2a (FIG. 6) determines whether the radio base station 2 to which the radio terminal 1 is connected when in the pause is a different radio base station, or the radio base station 2b or the radio base station 2a, by referring to the value of the CellID that is included in the RRC Connection Request (the Case value included in the RRC Connection Request corresponds to "returning from the pause") that is received from the radio terminal 1. In contrast, when receiving the RRC Connection Request (the Cause value included in the RRC Connection Request corresponds to "returning from the pause") from the radio terminal 1, based on whether or not the S1 setup information corresponding to the radio terminal 1 is retained, the radio base station 2b or the radio base station 2a may determine whether the radio base station 2 to which the radio terminal 1 is connected when in the pause is a different radio base station, or the radio base station 2b or the radio base station 2a.

That is, if the S1 setup information corresponding to the radio terminal 1 that transmits the RRC Connection Request is not retained, the radio base station 2b (FIG. 5) determines that the radio base station 2 to which the radio terminal 1 is connected when in the pause is the different radio base station 2. Furthermore, if the S1 setup information corresponding to the radio terminal 1 that transmits the RRC Connection Request is retained, the radio base station 2a (FIG. 6) determines that the radio base station 2 to which the radio terminal 1 is connected when in the pause is the radio base station 2a. Moreover, if it is determined that the radio base station 2 to which the radio terminal 1 is connected when in pause is the different radio base station 2, the radio base station 2b (FIG. 5) may receive the CellID (identification information on the cell to which the radio terminal 1 is connected before the pause) from the radio terminal 1, may contact the radio terminal 1 to receive the CellID, and may contact the mobile management entity 3 to receive the CellID.

Furthermore, a method in FIG. 5, in which the radio base station 2b obtains the S1 setup information is not limited to the method described above. For example, the following method may be considered.

In the example in FIG. 5, the radio base station 2b transmits the S1 Configuration Send Request that is the message that requests the S1 setup information, by specifying a transmission destination based on the identifier of the CellID that is included in the RRC Connection Request. There is a merit to this method that the amount of the messages is decreased. However, the radio base station 2b may broadcast the S1 Configuration Send Request to the adjacent base stations. Then, based on the identifier of the radio terminal 1 that is included in the S1 Configuration Send Request, the adjacent base station that receives the S1 Configuration Send Request checks whether the S1 setup information on the corresponding radio terminal 1 is retained, and if the S1 setup information is retained, transmits the S1 Configuration Send Response that is stored in the S1 setup information. When comparing this method with the method in FIG. 5, the amount of the messages is increased, but it is possible to omit the processing in which the radio terminal 1 retains or transmits the identifier of the moving-origin radio base station 2.

Furthermore, in the case in FIG. 5, the radio base station 2b receives the S1 setup information directly from the radio base station 2a, without the different apparatus as an intermediary, but may receive the S1 setup information through the different apparatus. For example, the radio terminal may receive and retain the S1 setup information from the moving-origin radio base station 2 when the radio terminal is in the pause, and may transmit the S1 setup information to the moving-destination radio base station 2 when the radio terminal resumes the communication. Furthermore, the host station such as the mobile management entity 3 may receive and retain the S1 setup information from the moving-origin radio base station 2 when the radio terminal is in the pause, and may transmit the S1 setup information to the moving-destination radio base station 2 when the radio terminal resumes the communication.

## Claims

1. A radio communication system comprising:
when operation of a radio terminal (1) pauses, a radio base station (2a) to which the radio terminal (1) is coupled before the operation starts to pause retains connection information for coupling the radio base station (2a) to the radio terminal (1); and
when the radio terminal (1) performs returning under the control of a different radio base station (2b), the different radio base station (2b) obtains the connection information that is retained by the radio base station (2a) to which the radio terminal (1) is coupled before the operation pauses and uses the connection information in setting up a connection of the radio base station (2a) to the radio terminal (1).

2. A radio base station (2b) comprising:
an obtainment unit that when after an operation pause, a radio terminal (1) under the control of a different radio base station (2a) moves to a cell under the control of the radio base station (2b) and performs returning, obtains connection information for coupling the radio base station (2b) to the radio terminal (1), which is retained in the different radio base station (2a), from the different radio base station (2a); and
a connection unit that is coupled to the radio terminal (1), based on the connection information.

3. The radio base station (2b) according to claim 2, further comprising:
a determination unit that, when the radio terminal (1) performs the returning, determines that starting of a pause of the operation of the radio terminal (1) is performed under the control of the different radio base station (2a),
wherein when the determination unit determines that the pause of the operation of the radio terminal (1) starts under the control of the different radio base station (2a), the obtainment unit obtains the connection information from the different radio base station (2a).

4. The radio base station (2b) according to claim 2 or 3, further comprising:
a storage unit that when the operation of the radio terminal (1) that is currently coupled to the radio base station (2b) under the control of the radio base station (2b) pauses, stores the connection information for the connection of the radio base station (2b) to the currently-coupled radio terminal (1),
wherein when a determination unit determines that the operation of the radio terminal (1) pauses under the control of the radio base station (2b), the connection unit couples the radio base station (2b) to the radio terminal (1), based on the connection information that is stored in the storage unit.

5. The radio base station (2b) according to any one of claims 2 to 4, further comprising:
a radio communication unit that receives from the radio terminal (1) a return message that indicates that the radio terminal (1) performs the returning from the pause of the operation,
wherein the obtainment unit obtains the connection information, based on the return message.

6. The radio base station (2b) according to claim 5,
wherein the return message includes radio base station (2b) identification information by which the radio base station (2b) identifies to which the radio terminal (1) is coupled at the time of the pause, and
wherein a determination unit performs the determination, based on the radio base station (2b) identification information.

7. The radio base station (2b) according to any one of claims 3 to 6, further comprising:
a network side communication unit that when a determination unit determines that the operation of the radio terminal (1) pauses under the control of the different radio base station (2a), transmits a request message that requests switching of a path between the radio terminal (1) and a high-level station.

8. The radio base station (2b) according to claim 7,
wherein the network side communication unit transmits a path switch message that is used at the time of handover, as the request message.

9. A radio base station (2a) comprising:
a retainment unit that when operation of a radio terminal (1) under the control pauses, retains connection information for coupling the radio base station (2a) to the radio terminal (1); and
a notification unit that when the radio terminal (1) performs returning under the control of a different radio base station (2b), notifies the connection information.

10. A radio terminal (1) comprising:
a transmission unit that when the radio terminal (1) performs returning from a pause of operation, transmits to a radio base station (2a) a return message that includes radio base station (2a) identification information by which a radio base station (2a) identifies to which the radio terminal (1) is coupled at the time of the pause and that indicates that the radio terminal (1) performs the returning.

11. A radio communication method, comprising:
when after an operation pause, a radio terminal (1) under the control of a different radio base station (2b) moves to a cell under the control of a radio base station (2b) and performs returning,
obtaining connection information for coupling the radio base station (2b) to the radio terminal (1), which is retained in the different radio base station (2a), from the different radio base station (2a); and
coupling the radio base station (2b) to the radio terminal (1), based on the connection information.
